(19) Europäisches Patentamt
European Patent Office
Office européen des brevets

(11) **EP 4 458 071 B1**

(12) **EUROPEAN PATENT SPECIFICATION**

(45) Date of publication and mention
of the grant of the patent:
**24.06.2026  Bulletin 2026/26**

(21) Application number: **22925291.1**

(22) Date of filing: **09.02.2022**

(51) International Patent Classification (IPC):
*H04W 56/00* (2009.01)      *H04W 72/23* (2023.01)
*H04W 74/00* (2009.01)      *H04W 76/15* (2018.01)
*H04W 74/0833* (2024.01)

(52) Cooperative Patent Classification (CPC):
**H04W 56/0045; H04W 72/23; H04W 74/004;
H04W 74/006; H04W 74/0833; H04W 76/15**

(86) International application number:
**PCT/CN2022/075633**

(87) International publication number:
**WO 2023/150928 (17.08.2023 Gazette 2023/33)**

(54) **MULTIPLE TIMING ADVANCE MANAGEMENT**

VERWALTUNG VON MEHRFACH-ZEITVORLAUF

GESTION D'AVANCE TEMPORELLE MULTIPLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.11.2024  Bulletin 2024/45**

(73) Proprietor: **Apple Inc.
Cupertino CA 95014 (US)**

(72) Inventors:
• NIU, Huaning
  **Cupertino, California 95014 (US)**
• YAO, Chunhai
  **Beijing 100022 (CN)**
• ZENG, Wei
  **Cupertino, California 95014 (US)**
• YE, Chunxuan
  **Cupertino, California 95014 (US)**
• SUN, Haitong
  **Cupertino, California 95014 (US)**
• XU, Fangli
  **Beijing 100022 (CN)**
• ZHANG, Dawei
  **Cupertino, California 95014 (US)**

• FAKOORIAN, Seyed Ali Akbar
  **Cupertino, California 95014 (US)**
• ZHANG, Yushu
  **Beijing 100022 (CN)**

(74) Representative: **Greengrass, Matthew James
Withers & Rogers LLP
2 London Bridge
London SE1 9RA (GB)**

(56) References cited:
WO-A1-2021/237712      WO-A2-2020/215108
WO-A2-2021/253056      CN-A- 113 647 046
US-A1- 2018 084 546      US-A1- 2020 053 752

• VIVO: "Remaining issues on multi beam
enhancement", 3GPP DRAFT; R1-2110990, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. e-Meeting;
20211111 - 20211119, 5 November 2021
(2021-11-05), Mobile Competence Centre ; 650,
route des Lucioles ; F-06921 Sophia-Antipolis
Cedex ; France, XP052073946

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD

The present application relates to wireless communications, and more particularly to systems, apparatuses, and methods for managing multiple timing advances in a wireless communication system.

### DESCRIPTION OF THE RELATED ART

Wireless communication systems are rapidly growing in usage. In recent years, wireless devices such as smart phones and tablet computers have become increasingly sophisticated. In addition to supporting telephone calls, many mobile devices (i.e., user equipment devices or UEs) now provide access to the internet, email, text messaging, and navigation using the global positioning system (GPS), and are capable of operating sophisticated applications that utilize these functionalities. Additionally, there exist numerous different wireless communication technologies and standards. Some examples of wireless communication standards include GSM, UMTS (associated with, for example, WCDMA or TD-SCDMA air interfaces), LTE, LTE Advanced (LTE-A), NR, HSPA, 3GPP2 CDMA2000 (e.g., 1xRTT, 1xEV-DO, HRPD, eHRPD), IEEE 802.11 (WLAN or Wi-Fi), BLUETOOTH™, etc.

The ever-increasing number of features and functionality introduced in wireless communication devices also creates a continuous need for improvement in both wireless communications and in wireless communication devices. In particular, it is important to ensure the accuracy of transmitted and received signals through user equipment (UE) devices, e.g., through wireless devices such as cellular phones, base stations and relay stations used in wireless cellular communications. In addition, increasing the functionality of a UE device can place a significant strain on the battery life of the UE device. Thus, it is very important to also reduce power requirements in UE device designs while allowing the UE device to maintain good transmit and receive abilities for improved communications. Accordingly, improvements in the field are desired.

The following documents provide further information which may be relevant as background information to the present disclosure: US 2018/084546 A1; and US 2020/053752 A1.

### SUMMARY

Embodiments are presented herein of apparatuses, systems, and methods for managing multiple timing advances in a wireless communication system.

The techniques may be used in scenarios in which a wireless device has established multiple wireless links with multiple transmission reception points. The techniques may include differentiating physical random access channel resources for the multiple transmission reception points, for example such that when the wireless device determines to initiate a random access procedure for timing advance measurement for a given transmission reception point, the wireless device can select a physical random access channel resource associated with the corresponding transmission reception point to use to initiate the random access procedure, which may help the cellular network identify that the random access procedure for timing advance measurement is for the intended transmission reception point.

The techniques described herein include further aspects of a framework for performing random access procedures for timing advance measurement in a scenario with multiple transmission reception points, including various possible ways to provide random access response messages to indicate timing advance commands, as well as to trigger message 3 transmissions for the random access procedures.

Additionally, techniques are described herein for managing timing advance groups for multiple transmission reception point operation, as well as for providing transmission reception point specific timing advance commands during normal operation (e.g., while in-sync with an unexpired timing alignment timer).

Note that the techniques described herein may be implemented in and/or used with a number of different types of devices, including but not limited to base stations, access points, cellular phones, portable media players, tablet computers, wearable devices, unmanned aerial vehicles, unmanned aerial controllers, automobiles and/or motorized vehicles, and various other computing devices.

This Summary is intended to provide a brief overview of some of the subject matter described in this document. Accordingly, it will be appreciated that the above-described features are merely examples and should not be construed to narrow the scope of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of various embodiments is considered in conjunction with the following drawings, in which:

> Figure 1 illustrates an exemplary (and simplified) wireless communication system, according to some embodiments;
> Figure 2 illustrates an exemplary base station in communication with an exemplary wireless user equipment (UE) device, according to some embodiments;
> Figure 3 illustrates an exemplary block diagram of a UE, according to some embodiments;
> Figure 4 illustrates an exemplary block diagram of a base station, according to some embodiments;
> Figure 5 is a flowchart diagram illustrating aspects of an exemplary possible method for managing multiple timing advances in a multi-transmission-reception-point wireless communication system, according to some embodiments; and
> Figures 6-16 illustrate exemplary aspects of various possible approaches to managing multiple timing advances in a multi-transmission-reception-point wireless communication system, according to some embodiments.

While features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the scope of the subject matter as defined by the appended claims.

## DETAILED DESCRIPTION

Acronyms

Various acronyms are used throughout the present disclosure. Definitions of the most prominently used acronyms that may appear throughout the present disclosure are provided below:

- **UE:** User Equipment
- **RF:** Radio Frequency
- **BS:** Base Station
- **GSM:** Global System for Mobile Communication
- **UMTS:** Universal Mobile Telecommunication System
- **LTE:** Long Term Evolution
- **NR:** New Radio
- **TX:** Transmission/Transmit
- **RX:** Reception/Receive
- **RAT:** Radio Access Technology
- **TRP:** Transmission-Reception-Point
- **DCI:** Downlink Control Information
- **CORESET:** Control Resource Set
- **QCL:** Quasi-Co-Located or Quasi-Co-Location
- **CSI:** Channel State Information
- **CSI-RS:** Channel State Information Reference Signals
- **CSI-IM:** Channel State Information Interference Management
- **CMR:** Channel Measurement Resource
- **IMR:** Interference Measurement Resource
- **ZP:** Zero Power
- **NZP:** Non Zero Power
- **CQI:** Channel Quality Indicator
- **PMI:** Precoding Matrix Indicator
- **RI:** Rank Indicator

Terms

The following is a glossary of terms that may appear in the present disclosure:

**Memory Medium** - Any of various types of non-transitory memory devices or storage devices. The term "memory medium" is intended to include an installation medium, e.g., a CD-ROM, floppy disks, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium may include other types of non-transitory memory as well or combinations thereof. In addition, the memory medium may be located in a first computer system in which the programs are executed, or may be located in a second different computer system which connects to the first computer system over a network, such as the Internet. In the latter instance, the second computer system may provide program instructions to the first computer system for execution. The term "memory medium" may include two or more memory mediums which may reside in different locations, e.g., in different computer systems that are connected over a network. The memory medium may store program instructions (e.g., embodied as computer programs) that may be executed by one or more processors.

**Carrier Medium -** a memory medium as described above, as well as a physical transmission medium, such as a bus, network, and/or other physical transmission medium that conveys signals such as electrical, electromagnetic, or digital signals.

**Computer System (or Computer)** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" may be broadly defined to encompass any device (or combination of devices) having at least one processor that executes instructions from a memory medium.

**User Equipment (UE) (or "UE Device")** - any of various types of computer systems or devices that are mobile or portable and that perform wireless communications. Examples of UE devices include mobile telephones or smart phones (e.g., iPhone™, Android™-based phones), tablet computers (e.g., iPad™, Samsung Galaxy™), portable gaming devices (e.g., Nintendo DS™, PlayStation Portable™, Gameboy Advance™, iPhone™), wearable devices (e.g., smart watch, smart glasses), laptops, PDAs, portable Internet devices, music players, data storage devices, other handheld devices, automobiles and/or motor vehicles, unmanned aerial vehicles (UAVs) (e.g., drones), UAV controllers (UACs), etc. In general, the term "UE" or "UE device" can be broadly defined to encompass any electronic, computing, and/or telecommunications device (or combination of devices) which is easily transported by a user and capable of wireless communication.

**Wireless Device -** any of various types of computer systems or devices that perform wireless communications. A wireless device can be portable (or mobile) or may be stationary or fixed at a certain location. A UE is an example of a wireless device.

**Communication Device** - any of various types of computer systems or devices that perform communications, where the communications can be wired or wireless. A communication device can be portable (or mobile) or may be stationary or fixed at a certain location. A wireless device is an example of a communication device. A UE is another example of a communication device.

**Base Station (BS)** - The term "Base Station" has the full breadth of its ordinary meaning, and at least includes a wireless communication station installed at a fixed location and used to communicate as part of a wireless telephone system or radio system.

**Processing Element (or Processor)** - refers to various elements or combinations of elements that are capable of performing a function in a device, e.g., in a user equipment device or in a cellular network device. Processing elements may include, for example: processors and associated memory, portions or circuits of individual processor cores, entire processor cores, processor arrays, circuits such as an ASIC (Application Specific Integrated Circuit), programmable hardware elements such as a field programmable gate array (FPGA), as well any of various combinations of the above.

**Wi-Fi** - The term "Wi-Fi" has the full breadth of its ordinary meaning, and at least includes a wireless communication network or RAT that is serviced by wireless LAN (WLAN) access points and which provides connectivity through these access points to the Internet. Most modern Wi-Fi networks (or WLAN networks) are based on IEEE 802.11 standards and are marketed under the name "Wi-Fi". A Wi-Fi (WLAN) network is different from a cellular network.

**Automatically** - refers to an action or operation performed by a computer system (e.g., software executed by the computer system) or device (e.g., circuitry, programmable hardware elements, ASICs, etc.), without user input directly specifying or performing the action or operation. Thus the term "automatically" is in contrast to an operation being manually performed or specified by the user, where the user provides input to directly perform the operation. An automatic procedure may be initiated by input provided by the user, but the subsequent actions that are performed "automatically" are not specified by the user, i.e., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form may be automatically filled out by the computer system where the computer system (e.g., software executing on the computer system) analyzes the fields of the form and fills in the form without any user input specifying the answers to the fields. As indicated above, the user may invoke the automatic filling of the form, but is not involved in the actual filling of the form (e.g., the user is not manually specifying answers to fields but rather they are being automatically completed). The present specification provides various examples of operations being automatically performed in response to actions the user has taken.

**Configured to** - Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112, paragraph six, interpretation for that component.

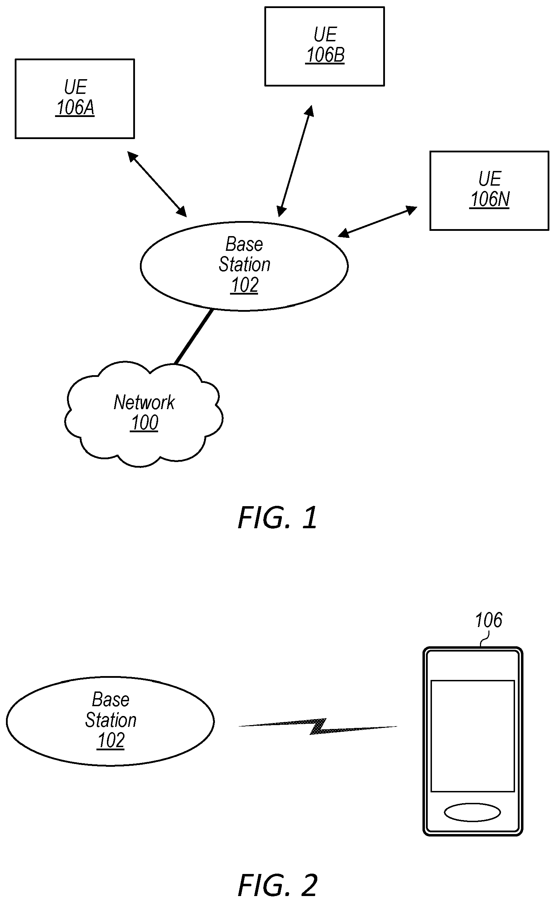

Figures 1 and 2 - Exemplary Communication System

Figure 1 illustrates an exemplary (and simplified) wireless communication system in which aspects of this disclosure may be implemented, according to some embodiments. It is noted that the system of Figure 1 is merely one example of a possible system, and embodiments may be implemented in any of various systems, as desired.

As shown, the exemplary wireless communication system includes a base station 102 which communicates over a transmission medium with one or more (e.g., an arbitrary number of) user devices 106A, 106B, etc. through 106N. Each of the user devices may be referred to herein as a "user equipment" (UE) or UE device. Thus, the user devices 106 are referred to as UEs or UE devices.

The base station 102 may be a base transceiver station (BTS) or cell site, and may include hardware and/or software that enables wireless communication with the UEs 106A through 106N. If the base station 102 is implemented in the context of LTE, it may alternately be referred to as an 'eNodeB' or 'eNB'. If the base station 102 is implemented in the context of 5G NR, it may alternately be referred to as a 'gNodeB' or 'gNB'. The base station 102 may also be equipped to communicate with a network 100 (e.g., a core network of a cellular service provider, a telecommunication network such as a public switched telephone network (PSTN), and/or the Internet, among various possibilities). Thus, the base station 102 may facilitate communication among the user devices and/or between the user devices and the network 100. The communication area (or coverage area) of the base station may be referred to as a "cell." As also used herein, from the perspective of UEs, a base station may sometimes be considered as representing the network insofar as uplink and downlink communications of the UE are concerned. Thus, a UE communicating with one or more base stations in the network may also be interpreted as the UE communicating with the network.

The base station 102 and the user devices may be configured to communicate over the transmission medium using any of various radio access technologies (RATs), also referred to as wireless communication technologies, or telecommunication standards, such as GSM, UMTS (WCDMA), LTE, LTE-Advanced (LTE-A), LAA/LTE-U, 5G NR, 3GPP2 CDMA2000 (e.g., 1xRTT, 1xEV-DO, HRPD, eHRPD), Wi-Fi, etc.

Base station 102 and other similar base stations operating according to the same or a different cellular communication standard may thus be provided as one or more networks of cells, which may provide continuous or nearly continuous overlapping service to UE 106 and similar devices over a geographic area via one or more cellular communication standards.

Note that a UE 106 may be capable of communicating using multiple wireless communication standards. For example, a UE 106 might be configured to communicate using either or both of a 3GPP cellular communication standard or a 3GPP2 cellular communication standard. In some embodiments, the UE 106 may be configured to perform techniques for managing multiple timing advances in a wireless communication system, such as according to the various methods described herein. The UE 106 might also or alternatively be configured to communicate using WLAN, BLUETOOTH™, one or more global navigational satellite systems (GNSS, e.g., GPS or GLONASS), one and/or more mobile television broadcasting standards (e.g., ATSC-M/H), etc. Other combinations of wireless communication standards (including more than two wireless communication standards) are also possible.

Figure 2 illustrates an exemplary user equipment 106 (e.g., one of the devices 106A through 106N) in communication with the base station 102, according to some embodiments. The UE 106 may be a device with wireless network connectivity such as a mobile phone, a handheld device, a wearable device, a computer or a tablet, an unmanned aerial vehicle (UAV), an unmanned aerial controller (UAC), an automobile, or virtually any type of wireless device. The UE 106 may include a processor (processing element) that is configured to execute program instructions stored in memory.

The UE 106 may perform any of the method embodiments described herein by executing such stored instructions. Alternatively, or in addition, the UE 106 may include a programmable hardware element such as an FPGA (field-programmable gate array), an integrated circuit, and/or any of various other possible hardware components that are configured to perform (e.g., individually or in combination) any of the method embodiments described herein, or any portion of any of the method embodiments described herein. The UE 106 may be configured to communicate using any of multiple wireless communication protocols. For example, the UE 106 may be configured to communicate using two or more of CDMA2000, LTE, LTE-A, 5G NR, WLAN, or GNSS. Other combinations of wireless communication standards are also possible.

The UE 106 may include one or more antennas for communicating using one or more wireless communication protocols according to one or more RAT standards. In some embodiments, the UE 106 may share one or more parts of a receive chain and/or transmit chain between multiple wireless communication standards. The shared radio may include a single antenna, or may include multiple antennas (e.g., for multiple-input, multiple-output or "MIMO") for performing wireless communications. In general, a radio may include any combination of a baseband processor, analog RF signal processing circuitry (e.g., including filters, mixers, oscillators, amplifiers, etc.), or digital processing circuitry (e.g., for digital modulation as well as other digital processing). Similarly, the radio may implement one or more receive and transmit chains using the aforementioned hardware. For example, the UE 106 may share one or more parts of a receive and/or transmit chain between multiple wireless communication technologies, such as those discussed above.

In some embodiments, the UE 106 may include any number of antennas and may be configured to use the antennas to transmit and/or receive directional wireless signals (e.g., beams). Similarly, the BS 102 may also include any number of antennas and may be configured to use the antennas to transmit and/or receive directional wireless signals (e.g., beams). To receive and/or transmit such directional signals, the antennas of the UE 106 and/or BS 102 may be configured to apply different "weight" to different antennas. The process of applying these different weights may be referred to as "precoding".

In some embodiments, the UE 106 may include separate transmit and/or receive chains (e.g., including separate antennas and other radio components) for each wireless communication protocol with which it is configured to communicate. As a further possibility, the UE 106 may include one or more radios that are shared between multiple wireless communication protocols, and one or more radios that are used exclusively by a single wireless communication protocol. For example, the UE 106 may include a shared radio for communicating using either of LTE or CDMA2000 1xRTT (or LTE or NR, or LTE or GSM), and separate radios for communicating using each of Wi-Fi and BLUETOOTH™. Other configurations are also possible.

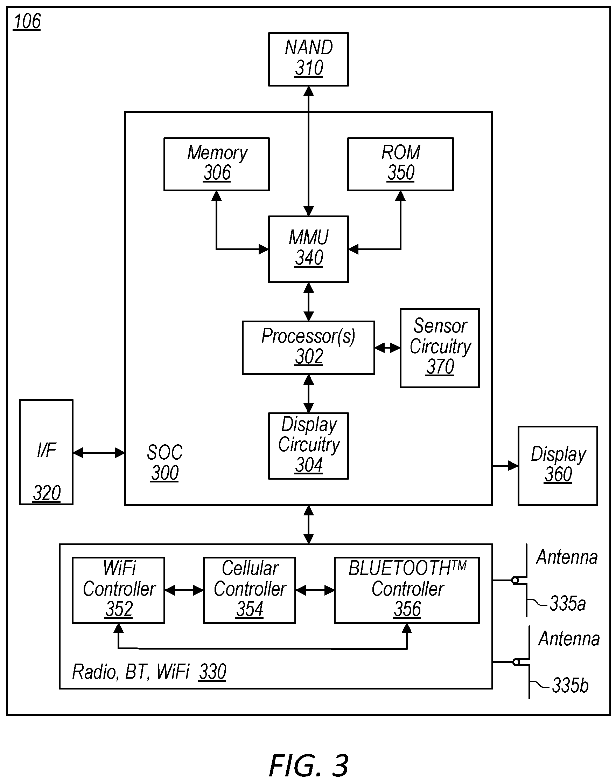

Figure 3 -Block Diagram of an Exemplary UE Device

Figure 3 illustrates a block diagram of an exemplary UE 106, according to some embodiments. As shown, the UE 106 may include a system on chip (SOC) 300, which may include portions for various purposes. For example, as shown, the SOC 300 may include processor(s) 302 which may execute program instructions for the UE 106 and display circuitry 304 which may perform graphics processing and provide display signals to the display 360. The SOC 300 may also include sensor circuitry 370, which may include components for sensing or measuring any of a variety of possible characteristics or parameters of the UE 106. For example, the sensor circuitry 370 may include motion sensing circuitry configured to detect motion of the UE 106, for example using a gyroscope, accelerometer, and/or any of various other motion sensing components. As another possibility, the sensor circuitry 370 may include one or more temperature sensing components, for example for measuring the temperature of each of one or more antenna panels and/or other components of the UE 106. Any of various other possible types of sensor circuitry may also or alternatively be included in UE 106, as desired. The processor(s) 302 may also be coupled to memory management unit (MMU) 340, which may be configured to receive addresses from the processor(s) 302 and translate those addresses to locations in memory (e.g., memory 306, read only memory (ROM) 350, NAND flash memory 310) and/or to other circuits or devices, such as the display circuitry 304, radio 330, connector I/F 320, and/or display 360. The MMU 340 may be configured to perform memory protection and page table translation or set up. In some embodiments, the MMU 340 may be included as a portion of the processor(s) 302.

As shown, the SOC 300 may be coupled to various other circuits of the UE 106. For example, the UE 106 may include various types of memory (e.g., including NAND flash 310), a connector interface 320 (e.g., for coupling to a computer system, dock, charging station, etc.), the display 360, and wireless communication circuitry 330 (e.g., for LTE, LTE-A, NR, CDMA2000, BLUETOOTH™, Wi-Fi, GPS, etc.). The UE device 106 may include or couple to at least one antenna (e.g., 335a), and possibly multiple antennas (e.g., illustrated by antennas 335a and 335b), for performing wireless communication with base stations and/or other devices. Antennas 335a and 335b are shown by way of example, and UE device 106 may include fewer or more antennas. Overall, the one or more antennas are collectively referred to as antenna 335. For example, the UE device 106 may use antenna 335 to perform the wireless communication with the aid of radio circuitry 330. The communication circuitry may include multiple receive chains and/or multiple transmit chains for receiving and/or transmitting multiple spatial streams, such as in a multiple-input multiple output (MIMO) configuration. As noted above, the UE may be configured to communicate wirelessly using multiple wireless communication standards in some embodiments.

The UE 106 may include hardware and software components for implementing methods for the UE 106 to perform techniques for managing multiple timing advances in a wireless communication system, such as described further subsequently herein. The processor(s) 302 of the UE device 106 may be configured to implement part or all of the methods described herein, e.g., by executing program instructions stored on a memory medium (e.g., a non-transitory computer-readable memory medium). In other embodiments, processor(s) 302 may be configured as a programmable hardware element, such as an FPGA (Field Programmable Gate Array), or as an ASIC (Application Specific Integrated Circuit). Furthermore, processor(s) 302 may be coupled to and/or may interoperate with other components as shown in Figure 3, to perform techniques for managing multiple timing advances in a wireless communication system according to various embodiments disclosed herein. Processor(s) 302 may also implement various other applications and/or end-user applications running on UE 106.

In some embodiments, radio 330 may include separate controllers dedicated to controlling communications for various respective RAT standards. For example, as shown in Figure 3, radio 330 may include a Wi-Fi controller 352, a cellular controller (e.g., LTE and/or LTE-A controller) 354, and BLUETOOTH™ controller 356, and in at least some embodiments, one or more or all of these controllers may be implemented as respective integrated circuits (ICs or chips, for short) in communication with each other and with SOC 300 (and more specifically with processor(s) 302). For example, Wi-Fi controller 352 may communicate with cellular controller 354 over a cell-ISM link or WCI interface, and/or BLUETOOTH™ controller 356 may communicate with cellular controller 354 over a cell-ISM link, etc. While three separate controllers are illustrated within radio 330, other embodiments have fewer or more similar controllers for various different RATs that may be implemented in UE device 106.

Further, embodiments in which controllers may implement functionality associated with multiple radio access technologies are also envisioned. For example, according to some embodiments, the cellular controller 354 may, in addition to hardware and/or software components for performing cellular communication, include hardware and/or software components for performing one or more activities associated with Wi-Fi, such as Wi-Fi preamble detection, and/or generation and transmission of Wi-Fi physical layer preamble signals.

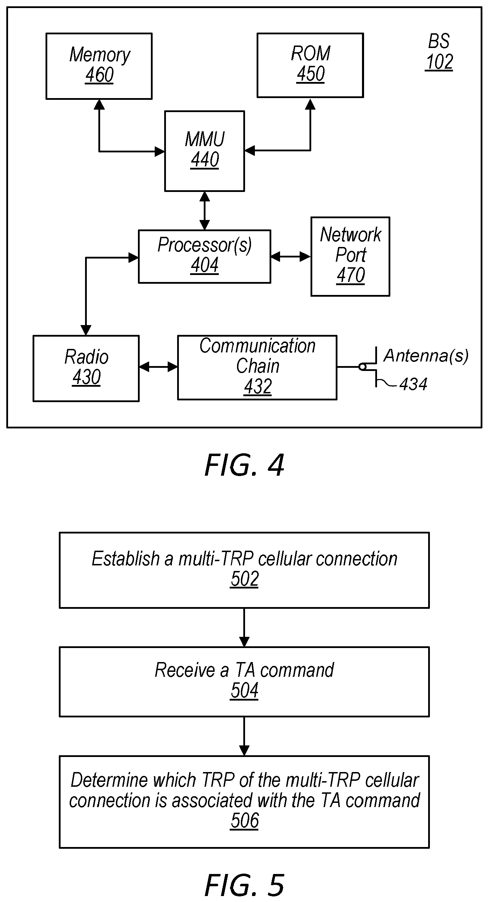

Figure 4 -Block Diagram of an Exemplary Base Station

Figure 4 illustrates a block diagram of an exemplary base station 102, according to some embodiments. It is noted that the base station of Figure 4 is merely one example of a possible base station. As shown, the base station 102 may include processor(s) 404 which may execute program instructions for the base station 102. The processor(s) 404 may also be coupled to memory management unit (MMU) 440, which may be configured to receive addresses from the processor(s) 404 and translate those addresses to locations in memory (e.g., memory 460 and read only memory (ROM) 450) or to other circuits or devices.

The base station 102 may include at least one network port 470. The network port 470 may be configured to couple to a telephone network and provide a plurality of devices, such as UE devices 106, access to the telephone network as described above in Figures 1 and 2. The network port 470 (or an additional network port) may also or alternatively be configured to couple to a cellular network, e.g., a core network of a cellular service provider. The core network may provide mobility related services and/or other services to a plurality of devices, such as UE devices 106. In some cases, the network port 470 may couple to a telephone network via the core network, and/or the core network may provide a telephone network (e.g., among other UE devices serviced by the cellular service provider).

In some embodiments, base station 102 may be a next generation base station, e.g., a 5G New Radio (5G NR) base station, or "gNB". In such embodiments, base station 102 may be connected to a legacy evolved packet core (EPC) network and/or to a NR core (NRC) network. In addition, base station 102 may be considered a 5G NR cell and may include one or more transmission and reception points (TRPs). In addition, a UE capable of operating according to 5G NR may be connected to one or more TRPs within one or more gNBs.

The base station 102 may include at least one antenna 434, and possibly multiple antennas. The antenna(s) 434 may be configured to operate as a wireless transceiver and may be further configured to communicate with UE devices 106 via radio 430. The antenna(s) 434 communicates with the radio 430 via communication chain 432. Communication chain 432 may be a receive chain, a transmit chain or both. The radio 430 may be designed to communicate via various wireless telecommunication standards, including, but not limited to, 5G NR, 5G NR SAT, LTE, LTE-A, GSM, UMTS, CDMA2000, Wi-Fi, etc.

The base station 102 may be configured to communicate wirelessly using multiple wireless communication standards. In some instances, the base station 102 may include multiple radios, which may enable the base station 102 to communicate according to multiple wireless communication technologies. For example, as one possibility, the base station 102 may include an LTE radio for performing communication according to LTE as well as a 5G NR radio for performing communication according to 5G NR. In such a case, the base station 102 may be capable of operating as both an LTE base station and a 5G NR base station. As another possibility, the base station 102 may include a multi-mode radio which is capable of performing communications according to any of multiple wireless communication technologies (e.g., 5G NR and Wi-Fi, 5G NR SAT and Wi-Fi, LTE and Wi-Fi, LTE and UMTS, LTE and CDMA2000, UMTS and GSM, etc.).

As described further subsequently herein, the BS 102 may include hardware and software components for implementing or supporting implementation of features described herein. The processor 404 of the base station 102 may be configured to implement and/or support implementation of part or all of the methods described herein, e.g., by executing program instructions stored on a memory medium (e.g., a non-transitory computer-readable memory medium). Alternatively, the processor 404 may be configured as a programmable hardware element, such as an FPGA (Field Programmable Gate Array), or as an ASIC (Application Specific Integrated Circuit), or a combination thereof. In the case of certain RATs, for example Wi-Fi, base station 102 may be designed as an access point (AP), in which case network port 470 may be implemented to provide access to a wide area network and/or local area network (s), e.g., it may include at least one Ethernet port, and radio 430 may be designed to communicate according to the Wi-Fi standard.

In addition, as described herein, processor(s) 404 may include one or more processing elements. Thus, processor(s) 404 may include one or more integrated circuits (ICs) that are configured to perform the functions of processor(s) 404. In addition, each integrated circuit may include circuitry (e.g., first circuitry, second circuitry, etc.) configured to perform the functions of processor(s) 404.

Further, as described herein, radio 430 may include one or more processing elements. Thus, radio 430 may include one or more integrated circuits (ICs) that are configured to perform the functions of radio 430. In addition, each integrated circuit may include circuitry (e.g., first circuitry, second circuitry, etc.) configured to perform the functions of radio 430.

Reference Signals

A wireless device, such as a user equipment, may be configured to perform a variety of tasks that include the use of reference signals (RS) provided by one or more cellular base stations. For example, initial access and beam measurement by a wireless device may be performed based at least in part on synchronization signal blocks (SSBs) provided by one or more cells provided by one or more cellular base stations within communicative range of the wireless device. Another type of reference signal commonly provided in a cellular communication system may include channel state information (CSI) RS. Various types of CSI-RS may be provided for tracking (e.g., for time and frequency offset tracking), beam management (e.g., with repetition configured, to assist with determining one or more beams to use for uplink and/or downlink communication), and/or channel measurement (e.g., CSI-RS configured in a resource set for measuring the quality of the downlink channel and reporting information related to this quality measurement to the base station), among various possibilities. For example, in the case of CSI-RS for CSI acquisition, the UE may periodically perform channel measurements and send channel state information (CSI) to a BS. The base station can then receive and use this channel state information to determine an adjustment of various parameters during communication with the wireless device. In particular, the BS may use the received channel state information to adjust the coding of its downlink transmissions to improve downlink channel quality.

In many cellular communication systems, the base station may transmit some or all such reference signals (or pilot signals), such as SSB and/or CSI-RS, on a periodic basis. In sonic instances, aperiodic reference signals (e.g., for aperiodic CSI reporting) may also or alternatively be provided.

As a detailed example, in the 3GPP NR cellular communication standard, the channel state information fed back from the UE based on CSI-RS for CSI acquisition may include one or more of a channel quality indicator (CQI), a precoding matrix indicator (PMI), a rank indicator (RI), a CSI-RS Resource Indicator (CRI), a SSBRI (SS/PBCH Resource Block Indicator, and a Layer Indicator (LI), at least according to some embodiments.

The channel quality information may be provided to the base station for link adaptation, e.g., for providing guidance as to which modulation & coding scheme (MCS) the base station should use when it transmits data. For example, when the downlink channel communication quality between the base station and the UE is determined to be high, the UE may feed back a high CQI value, which may cause the base station to transmit data using a relatively high modulation order and/or a low channel coding rate. As another example, when the downlink channel communication quality between the base station and the UE is determined to be low, the UE may feed back a low CQI value, which may cause the base station to transmit data using a relatively low modulation order and/or a high channel coding rate.

PMI feedback may include preferred precoding matrix information, and may be provided to a base station in order to indicate which MIMO precoding scheme the base station should use. In other words, the UE may measure the quality of a downlink MIMO channel between the base station and the UE, based on a pilot signal received on the channel, and may recommend, through PMI feedback, which MIMO precoding is desired to be applied by the base station. In some cellular systems, the PMI configuration is expressed in matrix form, which provides for linear MIMO precoding The base station and the UE may share a codebook composed of multiple precoding matrixes, where each MIMO precoding matrix in the codebook may have a unique index. Accordingly, as part of the channel state information fed back by the UE, the PMI may include an index (or possibly multiple indices) corresponding to the most preferred MIMO precoding matrix (or matrixes) in the codebook. This may enable the UE to minimize the amount of feedback information. Thus, the PMI may indicate which precoding matrix from a codebook should be used for transmissions to the UE, at least according to some embodiments.

The rank indicator information (RI feedback) may indicate a number of transmission layers that the UE determines can be supported by the channel, e.g, when the base station and the UE have multiple antennas, which may enable multi-layer transmission through spatial multiplexing. The RI and the PMI may collectively allow the base station to know which precoding needs to be applied to which layer, e.g., depending on the number of transmission layers.

In some cellular systems, a PMI codebook is defined depending on the number of transmission layers. In other words, for R-layer transmission, N number of $N_t \times R$ matrices may be defined (e.g., where R represents the number of layers, $N_t$ represents the number of transmitter antenna ports, and N represents the size of the codebook). In such a scenario, the number of transmission layers (R) may conform to a rank value of the precoding matrix ($N_t \times R$ matrix), and hence in this context R may be referred to as the "rank indicator (RI)".

Thus, the channel state information may include an allocated rank (e.g., a rank indicator or RI). For example, a MIMO-capable UE communicating with a BS may include four receiver chains, e.g., may include four antennas. The BS may also include four or more antennas to enable MIMO communication (e.g., 4 x 4 MIMO). Thus, the UE may be capable of receiving up to four (or more) signals (e.g., layers) from the BS concurrently. Layer to antenna mapping may be applied, e.g., each layer may be mapped to any number of antenna ports (e.g., antennas). Each antenna port may send and/or receive information associated with one or more layers. The rank may include multiple bits and may indicate the number of signals that the BS may send to the UE in an upcoming time period (e.g., during an upcoming transmission time interval or TTI). For example, an indication of rank 4 may indicate that the BS will send 4 signals to the UE. As one possibility, the RI may be two bits in length (e.g., since two bits are sufficient to distinguish 4 different rank values). Note that other numbers and/or configurations of antennas (e.g., at either or both of the UE or the BS) and/or other numbers of data layers are also possible, according to various embodiments.

Figure 5 - Managing Multiple Timing Advances

A wireless device may commonly need to transmit uplink signals in a cellular communication system using a timing advance, for example to compensate for the propagation delay between the wireless device and the transmission-reception-point with which the wireless device is communicating. According to some cellular communication technologies, it may be possible for a wireless device to communicate with multiple transmission-reception-points (TRPs), including potentially simultaneously. Accordingly, at least in some instances, it may be possible that a wireless device could have need to use multiple, potentially different, timing advances in order to communicate with multiple such TRPs.

Thus, it may be beneficial to specify techniques for supporting effective multiple timing advance management for handling multi-TRP scenarios. To illustrate one such set of possible techniques, Figure 5 is a flowchart diagram illustrating a method for managing multiple timing advances for multi-TRP operation in a wireless communication system, at least according to some embodiments.

Aspects of the method of Figure 5 may be implemented by a wireless device, e.g., in conjunction with one or more cellular base stations, such as a UE 106 and a BS 102 illustrated in and described with respect to various of the Figures herein, or more generally in conjunction with any of the computer circuitry, systems, devices, elements, or components shown in the above Figures, among others, as desired. For example, a processor (and/or other hardware) of such a device may be configured to cause the device to perform any combination of the illustrated method elements and/or other method elements.

Note that while at least some elements of the method of Figure 5 are described in a manner relating to the use of communication techniques and/or features associated with 3GPP and/or NR specification documents, such description is not intended to be limiting to the disclosure, and aspects of the method of Figure 5 may be used in any suitable wireless communication system, as desired. In various embodiments, some of the elements of the methods shown may be performed concurrently, in a different order than shown, may be substituted for by other method elements, or may be omitted. Additional method elements may also be performed as desired. As shown, the method of Figure 5 may operate as follows.

In 502, the wireless device may establish a wireless link with a cellular base station. According to some embodiments, the wireless link may include a cellular link according to 5G NR. For example, the wireless device may establish a session with an AMF entity of the cellular network by way of one or more gNBs that provide radio access to the cellular network. As another possibility, the wireless link may include a cellular link according to LTE. For example, the wireless device may establish a session with a mobility management entity of the cellular network by way of an eNB that provides radio access to the cellular network. Other types of cellular links are also possible, and the cellular network may also or alternatively operate according to another cellular communication technology (e.g., UMTS, CDMA2000, GSM, etc.), according to various embodiments.

Establishing the wireless link may include establishing a RRC connection with a serving cellular base station, at least according to some embodiments. Establishing the first RRC connection may include configuring various parameters for communication between the wireless device and the cellular base station, establishing context information for the wireless device, and/or any of various other possible features, e.g., relating to establishing an air interface for the wireless device to perform cellular communication with a cellular network associated with the cellular base station. After establishing the RRC connection, the wireless device may operate in a RRC connected state. In some instances, the RRC connection may also be released (e.g., after a certain period of inactivity with respect to data communication), in which case the wireless device may operate in a RRC idle state or a RRC inactive state. In some instances, the wireless device may perform handover (e.g., while in RRC connected mode) or cell re-selection (e.g., while in RRC idle or RRC inactive mode) to a new serving cell, e.g., due to wireless device mobility, changing wireless medium conditions, and/or for any of various other possible reasons.

At least according to some embodiments, the wireless device may establish multiple wireless links, e.g., with multiple TRPs (e.g., a "first" TRP and a "second" TRP) of the cellular network, according to a multi-TRP configuration. In such a scenario, the wireless device may be configured (e.g., via RRC signaling) with one or more transmission control indicators (TCIs), e.g., which may correspond to various beams that can be used to communicate with the TRPs. Further, it may be the case that one or more configured TCI states may be activated by media access control (MAC) control element (CE) for the wireless device at a particular time. Note that the multiple TRPs may be associated with the same cell or may be associated with different cells, according to various embodiments.

At least in some instances, establishing the wireless link(s) may include the wireless device providing capability information for the wireless device. Such capability information may include information relating to any of a variety of types of wireless device capabilities.

For a multi-TRP configuration, separate timing advances (TAs) may be maintained for the different TRPs. According to some embodiments, the TAs for different TRPs may belong to different TA groups (TAGs). The wireless device may be configured to start or restart a timing alignment timer (e.g., *timeAlignmentTimer*) for a TRP (for the associated TAG) when it receives a TA command for the corresponding TRP. In such a scenario, when the timing alignment timer for a TAG expires, the wireless device consider itself to no longer have a valid TA for the TRP associated with the TAG. The wireless device may release resources (e.g., PUCCH, SRS, any configured downlink assignments and uplink grants, any PUSCH resources for semi-persistent CSI reporting, etc.) and/or clear buffers (e.g., hybrid automatic repeat request (HARQ) buffers) for the TRP associated with the TAG. If the timing alignment timer for the other TRP has not expired, such resources/buffers for that TRP may be maintained, at least according to some embodiments. Otherwise, if both timing alignment timers have expired, such resources/buffers for both TRPs may be released/cleared.

As another possibility, it may be the case that the TAs for different TRPs can belong to the same TAG. In such a scenario, it may be possible that a TA process or sub-group is maintained for each TRP. The process/sub-group index can be associated with a CORESETPoolIndex for the TRP, in some embodiments. In some embodiments, an additional timing alignment timer may be provided in a TAG, e.g., to account for multiple TRPs with separate TAs being part of the TAG (e.g., it may be the case that such an additional timing alignment timer for a TAG is only used for a cell with multi-TRP operation). In such a scenario, each timing alignment timer may be started or restarted by the wireless device when it receives a TA command for the corresponding TRP. If the timing alignment timer for a TRP expires, the wireless device may release resources and/or clear buffers for the TRP associated with the timing alignment timer, while potentially maintaining such resources and/or buffers for a TRP with an unexpired timing alignment timer, if applicable.

Alternatively, it may be the case that multiple TRPs that belong to the same TAG can share a common timing alignment timer. In such a scenario, the timing alignment timer may be started or restarted by the wireless device when it receives a TA command for one or both TRPs. If the timing alignment timer expires, the wireless device may release resources and/or clear buffers for both TRPs.

In 504, the wireless device may receive a ("first") TA command for the first TRP. The first TA command may be received via a media access control (MAC) control element (CE), at least as one possibility. The MAC CE may include information identifying that the first TA command is associated with the first TRP, for example via a field indicating a TRP index associated with the first TA command. In some embodiments, the MAC CE including the first TA command may be provided while an existing timing alignment timer is running for the first TRP and the wireless device is in-sync with the first TRP. In such a scenario, the first TA command may be used to update the existing TA for the first TRP and the timing alignment timer for the first TRP may be restarted.

It may be possible for the MAC CE to further include a ("second") TA command for the second TRP. The MAC CE may also include information identifying that the second TA command is associated with the second TRP, for example via a field indicating a TRP index associated with the second TA command. In some embodiments, the second TA command may be a differential TA command, which may for example be configured to be derived based at least in part on the first TA command. It may also be the case that the second TA command is provided while an existing timing alignment timer is running for the second TRP and the wireless device is in-sync with the second TRP. In such a scenario, the second TA command may be used to update the existing TA for the second TRP and the timing alignment timer for the second TRP (which may be the same timing alignment timer as for the first TRP, or may be separate from the timing alignment timer for the first TRP, as previously noted herein) may be restarted.

It may also be possible that the first TA command is received by the wireless device in a random access response (RAR) transmitted by a serving cellular base station for the wireless device. Such a scenario may occur, for example, if the wireless device initiates a physical random access channel (PRACH) procedure for TA measurement for the first TRP. Such a PRACH procedure for TA measurement for the first TRP could be triggered by the wireless device autonomously, or by the cellular base station

In a scenario in which the wireless device autonomously determines to initiate a PRACH procedure for TA measurement for the first TRP, such a determination may be based on any of a variety of considerations. For example, the determination could be based at least in part on detecting that the wireless link with the first TRP is out-of-sync. The determination could also be based at least in part on measuring good signal strength (e.g., reference signal received power (RSRSP) above a configured threshold) for the first TRP. Note that the wireless device could autonomously determine to initiate a PRACH procedure for TA measurement for the second TRP in a similar manner, e.g., if the configured conditions for autonomously triggering a PRACH procedure for TA measurement for the second TRP are met.

In a scenario in which the wireless device is triggered to initiate a PRACH procedure for TA measurement for the first TRP by the cellular base station, it may be the case that the wireless device receives downlink control information (DCI) via a physical downlink control channel (PDCCH), where the DCI is configured to trigger the PRACH procedure for TA measurement for the first TRP. Such triggering of a PRACH procedure for TA measurement for a TRP may be performed in case the timing alignment timer for the TRP has expired, at least as one possibility. Note that such DCI may potentially also be configured to trigger a PRACH procedure for TA measurement for the second TRP. Alternatively, it may be possible for separate DCI transmissions to be provided to trigger a PRACH procedure for TA measurement for the first TRP and a PRACH procedure for TA measurement for the second TRP. Note that the DCI transmission(s) may indicate whether a PRACH procedure for TA measurement is being configured by the DCI for the first TRP, the second TRP, or both the first TRP and the second TRP. For example, the TRP for which the PRACH procedure for TA measurement is being configured could be indicated based on a TRP index field included in the DCI, or a CORESETPoolIndex associated with the DCI; a CORESETPoolIndex determined based at least in part on the CORESETPoolIndex associated with the DCI (e.g., modulo 2 of the CORESETPoolIndex associated with the DCI, as one possibility); or a starting control channel element (CCE) index for the DCI (e.g., an odd index could indicate the first TRP and an even index could indicate the second TRP, or *vice versa*, as one possibility).

If the wireless device determines to initiate a ("first") PRACH procedure for TA measurement for the first TRP (e.g., autonomously or based on a triggering DCI), the wireless device may select a PRACH resource on which to transmit a first PRACH preamble, and may transmit the first PRACH preamble using the selected PRACH resource. Similarly, if the wireless device determines to initiate a ("second") PRACH procedure for TA measurement for the second TRP (e.g., autonomously or based on a triggering DCI), the wireless device may select a PRACH resource on which to transmit a second PRACH preamble, and may transmit the second PRACH preamble using the selected PRACH resource. In each such case, the PRACH resource on which the PRACH preamble is transmitted may be selected based at least in part the corresponding TRP. For example, it may be the case that different PRACH resources are configured for the first TRP and the second TRP, such that it may be possible to select a PRACH resource associated with the first TRP to transmit the first PRACH preamble initiating the first PRACH procedure for TA measurement for the first TRP and/or to select a PRACH resource associated with the second TRP to transmit the second PRACH preamble initiating the second PRACH procedure for TA measurement for the second TRP. The different PRACH resources may be configured separately for the different TRPs, e.g., in case the different TRPs are associated with different cells (e.g., the first TRP with a first cell and the second TRP with a second cell), or, in case the different TRPs are associated with the same cell, configuration information may be provided to split PRACH resources for the cell into PRACH resources for the first TRP and PRACH resources for the second TRP, at least according to some embodiments.

In case the wireless device initiates both a first PRACH procedure for TA measurement for the first TRP and a second PRACH procedure for TA measurement for the second TRP, it may be the case that the RAR also includes a second TA command for the second TRP. In a scenario in which a single DCI transmission triggered both the first PRACH procedure and the second PRACH procedure, the RAR may be transmitted from the same TRP from which the triggering DCI is transmitted. The TA commands in the RAR may be ordered in such a manner as to indicate which TA command is associated with which TRP, as one possibility. For example, the first TA command included in the RAR may be for the first TRP and the second TA command included in the RAR may be for the second TRP. Alternatively, or in addition, explicit TRP index information for the TRP associated with the TA command may be included in the RAR for each TA command. If desired, it may be possible that the second TA command is a differential TA command, e.g., which may be configured to be derived based at least in part on the first TA command.

If a multi-PRACH RAR is provided (e.g., including multiple TA commands), it may be the case that the RAR triggers the wireless device to transmit one message 3 for both the first PRACH procedure and the second PRACH procedure. In such a scenario, an indication may be provided of the target TRP index for the wireless device to identify the transmit beam for the message 3; alternatively, the target TRP index could be implicitly determined (e.g., as the one with the lower CORESETPoolIndex, or in any of various ways). As another possibility, the RAR may trigger the wireless device to transmit separate message 3s for the first and second PRACH procedures (e.g., a first message 3 for the first PRACH procedure and a second message 3 for the second PRACH procedure).

It should also be noted that there may be multiple possible ways to determine the random access radio network temporary identifier (RA-RNTI) to use to detect the RAR in case a multi-PRACH RAR is provided. For example, it may be possible to calculate multiple RA-RNTIs associated with the multiple PRACH occasions in which the random access preambles are transmitted, and it may be useful to specify a manner in which to determine which such RA-RNTI for a wireless device to use. As one such possibility, the RA-RNTI for the RAR may be determined based at least in part on the TRP indexes associated with the first PRACH preamble transmission and the second PRACH preamble transmission; for example, the PRACH occasion with the lower TRP index may be used to calculate the RA-RNTI for the multi-PRACH RAR. As another possibility, the RA-RNTI for the RAR may be determined based at least in part on the timing associated with the first PRACH preamble transmission and the second PRACH preamble transmission; for example, the earlier (or later) transmitted PRACH occasion may be used to calculate the RA-RNTI for the multi-PRACH RAR. As a further possibility, the RA-RNTI for the RAR may be determined based at least in part on the frequency associated with the first PRACH preamble transmission and the second PRACH preamble transmission; for example, the PRACH occasion with the smaller (or larger) frequency domain index may be used to calculate the RA-RNTI for the multi-PRACH RAR. As a still further possibility, the RA-RNTI for the RAR may be determined based at least in part on the RA-RNTI values associated with the first PRACH preamble transmission and the second PRACH preamble transmission; for example, the minimal (or maximal) RA-RNTI calculated form each PRACH occasion can be applied. As a yet further possibility, any RA-RNTI calculated from any of the PRACH occasions can be used as a possible RA-RNTI; for example, the cellular base station could send one RAR repeatedly based on all of the possible RA-RNTI values for the RAR, or could send one RAR based on one possible RA-RNTI value for the RAR, and the wireless device may perform blind detection for RAR decoding using all of the possible RA-RNTI values for the RAR.

Alternatively, it may be possible that separate RARs are provided in response to the first PRACH preamble and the second PRACH preamble. In such a scenario, each RAR may be provided based on the beam for the triggering DCI (e.g., a RAR may be transmitted form the same TRP as the triggering TRP, which may potentially also be the TRP associated with the TA command provided in the RAR). Alternatively, or in addition, explicit TRP index information for the TRP associated with the TA command may be included in each RAR. Each such RAR may trigger the wireless device to transmit a message 3 for the corresponding PRACH procedure.

In 506, the wireless device may associate the TA command(s) received by the wireless device with the corresponding TRP(s), e.g., including at least associating the first TA command with the first TRP. The manner in which the wireless device determines which TRP a TA command is associated with may depend on the manner in which the TA command is provided. As previously described herein, this may include identifying a TRP index explicitly indicated with the TA command, identifying a TRP associated with a beam based on which the TA command was received, or identifying an order in which TA commands were received in a MAC CE RAR that includes multiple TA commands for multiple TRPs, among various possibilities. The wireless device may start or restart a timing alignment timer for the TRP(s) for which the TA command(s) is (are) received, and may determine a TA to use for uplink communication with the corresponding TRP for each such TA command received, at least according to some embodiments. The wireless device may subsequently perform one or more uplink communications (e.g., potentially including using one or more uplink grants configured in a RAR as part of a PRACH procedure for TA measurement) using the determined TA(s).

Thus, at least according to some embodiments, the method of Figure 5 may be used to provide a framework according to which a wireless device can manage multiple timing advances for multiple TRPs, and thus to assist with efficient and effective cellular communication in a cellular network, at least in some instances.

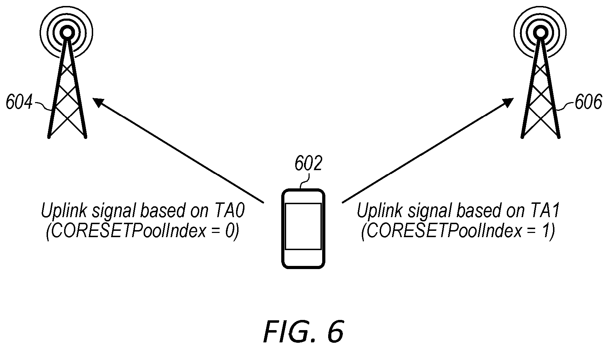

Figures 6-16 and Additional Information

Figures 6-16 illustrate further aspects that might be used in conjunction with the method of Figure 5 if desired. It should be noted, however, that the exemplary details illustrated in and described with respect to Figures 6-16 are not intended to be limiting to the disclosure as a whole: numerous variations and alternatives to the details provided herein below are possible and should be considered within the scope of the disclosure.

In a cellular communication system, a UE may typically need to transmit uplink signals with a timing advance (TA) to compensate for the propagation delay between the UE and the base station (e.g., gNB or eNB, etc.) to which the uplink signals are being transmitted. The gNB may be able to measure an appropriate TA based on uplink transmissions by the UE and indicate the TA to the UE by way of a media access control (MAC) control element (CE) for TA command. The gNB can direct or order the UE to perform a physical random access channel (PRACH) transmission using a physical downlink control channel (PDCCH). In some instances, the PRACH for TA measurement can be triggered using downlink control information (DCI) format 1_0 (e.g., as described further in 3GPP TS 38.212 v.17.0.0 section 7.3.1.2.1, at least as one possibility). The gNB may optionally be able to indicate preamble index, associated synchronization signal block (SSB) index, and PRACH Mask index for the UE to identify the PRACH resource, e.g., for a contention free random access procedure, as one possibility. As another possibility, if the preamble index is set to all zeros, the UE may be able to randomly select one PRACH resource, e.g., for a contention based random access procedure. The PRACH transmission to trigger the random access response may be transmitted based on the beam for the PDCCH that triggered the PRACH, at least according to some embodiments.

In some scenarios, it may be possible that component carriers (CCs) in a group can share the same TA, which can accordingly be configured for a TA group (TAG). For example, TAG-Id may be configured in the RRC parameter *servingCellConfig* (e.g., as described further in 3GPP TS 38.331 v.16.7.0 section 6.3.2, at least as one possibility). For each TAG, a timer may be configured by the RRC parameter *timeAlignmentTimer.* The timer for a given TAG may start or restart after a UE receives a TA command for the TAG. The TAG for a SpCell may be indicated as a PTAG, while other TAGs may be referred to as STAGs, at least according to some embodiments. It may be the case that the MAC entity only performs the random access preamble and message A (MSGA) transmission when the *timeAlignmentTimer* associated with the TAG to which this serving cell belongs is not running. When the *timeAlignmentTimer* associated with the PTAG is not running, it may be the case that the MAC entity does not perform any uplink transmission on any serving cell except the random access preamble and MSGA transmission on the SpCell. Note that further description of possible UE behavior when the *timeAlignmentTimer* expires, at least according to some embodiments, may be defined in 3GPP TS 38.321 v.16.7.0 section 5.2.

For multi- transmission-reception-point (TRP) operation, the propagation delay between the UE and the different TRPs can be different, such that the UE may need to maintain more than 1 TA (e.g., 2 TAs for 2 TRPs). The two TRPs may be from the same serving cell or different serving cells. Signals from different TRPs in such a scenario may be associated with different CORESETPoolIndex values, e.g., as configured by RRC. Figure 6 illustrates exemplary aspects of one possible multi-TRP cellular communication system, e.g., in which a UE 602 communicates with a first TRP 604 (with CORESETPoolIndex=0 and TA0) and a second TRP 606 (with CORESETPoolIndex=1 and TA1).

Accordingly, it may be important to provide a framework for managing multiple TAs for multiple such TRPs, e.g., in order to effectively support multi-TRP uplink operation. One aspect of such a framework may include providing techniques for measuring the TA for multiple TRPs. Another aspect of such a framework may include providing techniques for maintaining the timer for TA alignment for CCs within a group, where the CCs may be configured with the same or different operation (e.g., single-TRP operation and multi-TRP operation). A further aspect of such a framework may include providing techniques for providing TRP specific TA command indications.

In order to measure the TA for multiple TRPs, it may be the case that the PRACH resources for each TRP are configured by RRC. If the TRPs belong to the same cell, the gNB may be able to divide the SSBs into N (e.g., N=2) groups by RRC configuration. Each group may be associated with one TRP (e.g., one CORESETPoolIndex). Alternatively, the gNB may be able to divide the PRACH occasions (RO) or preambles into N groups. If divided by RO, all the preambles in the RO may be associated with one specific TRP; the preambles can further be grouped for 2-step RACH and 4-step RACH usage. Otherwise, the preambles may be divided into N groups for different TRPs and for 4-step RACH and 2-step RACH.

If the TRPs belong to different cells, the gNB may be able to provide a subset of or all parameters in *RACH-ConfigCommon* (e.g., as further described in TS 38.331 section 6.3.2, according to some embodiments) and/or *RACH-ConfigDedicated* (e.g., as also further described in TS 38.331 section 6.3.2, according to some embodiments) for each cell to the UE based on RRC signaling. As a possible extension, to support 2-steap RACH based operation, the gNB may be able to provide a subset of or all parameters in *RACH-ConfigCommonTwoStepRA* for each cell.

Having configured the PRACH resources for each TRP, the gNB may be able to use a PDCCH ordered PRACH to trigger a PRACH for TA measurement. As one option, the DCI associated with the PDCCH can trigger PRACH for TA measurement for one TRP. A field to indicate the TRP index (e.g., CORESETPoolIndex or cell index) can be introduced in the DCI, as one possibility for indicating the TRP. As another possibility, the TRP index may be determined by the CORESETPoolIndex for the CORESET with the scheduling DCI. Alternatively, the TRP index could be determined as modulo 2 of the CORESETPoolIndex for the CORESET with the scheduling DCI, e.g., to address a possible scenario in which the TA from the other TRP is sufficiently off that the PDCCH in the downlink is not decoded. For example, in such a scenario, if CORESETPoolIndex for the scheduling DCI is 0, the TRP index triggering PRACH is TRP 1. As a further possibility, the TRP index (e.g., CORESETPoolIndex) can be indicated based on the starting control channel element (CCE) index for the DCI; for example, an odd index could be used to indicate the first CORESETPoolIndex while an even index could indicate the second CORESETPoolIndex, or *vice versa*, or any of various other arrangements could be defined, as desired.

It may also be possible for the DCI to trigger PRACH for TA measurement for one or more than one TRP. As one possibility, a field to indicate the TRP index(es) can be introduced. As one such example, a 2-bit field could be provided, where the value "00" indicates the first TRP, "01" indicates the second TRP, and "11" indicates both TRPs. As another possibility, the TRP index(es) can be determined by the starting CCE index. The DCI may provide some additional indicators to identify the second PRACH resources, if desired. For example, the preamble index for the second PRACH resources could be provided; if not provided, the PRACH resources may share the same preamble index. As another example, the SS/PBCH index for the second PRACH resources could be provided. As a further example, the PRACH mask index for the second PRACH resources could be provided; if not provided, the PRACH resources may share the same PRACH mask index.

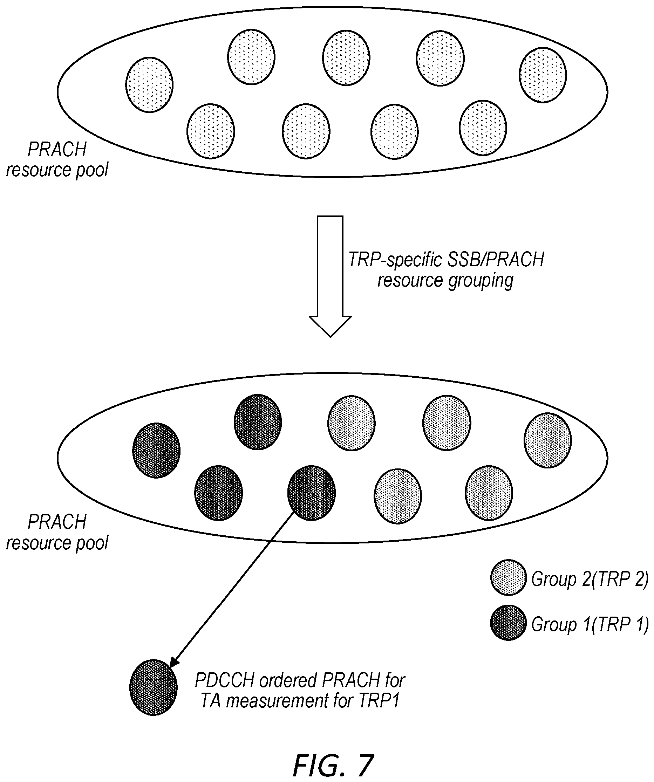

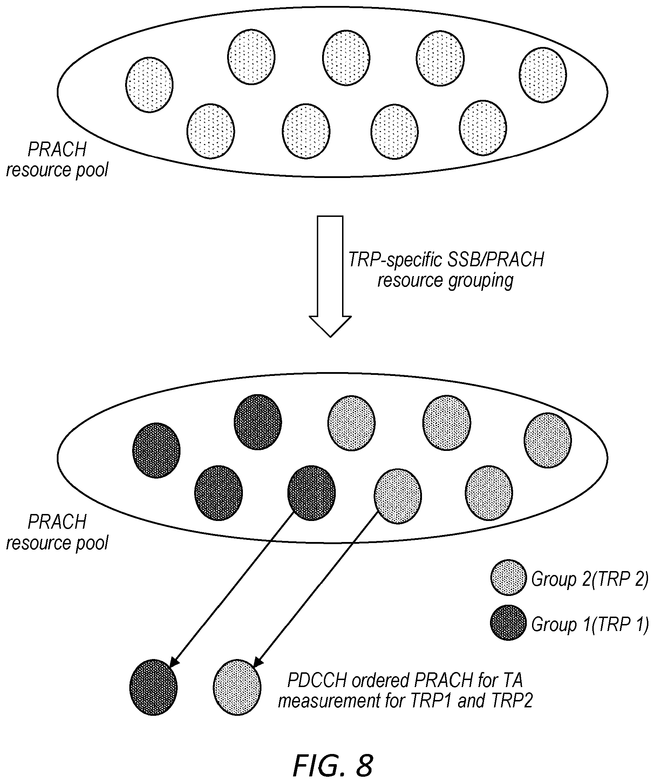

Figures 7-8 illustrates aspects of example scenario in which PDCCH ordered PRACH for TA measurement is provided. In both scenarios, the gNB may perform TRP-specific SSB/PRACH resource grouping. In the scenario of Figure 7, PDCCH ordered PRACH for TA measurement may be provided for a first TRP ("TRP1") but not for a second TRP ("TRP2"). In the scenario of Figure 8, PDCCH ordered PRACH for TA measurement may be provided for both TRPs.

After receiving the DCI, the UE can select the corresponding PRACH resource(s) for the indicated CORESETPoolIndex(es), and perform a PRACH transmission (or multiple PRACH transmissions) accordingly.

In response to the PRACH transmission, the gNB may be able to send a random access response (RAR) to provide a TA command. If a single-PRACH transmission is performed, the gNB may send one RAR based on the beam for triggering DCI. The RAR may be transmitted form the same TRP as the triggering DCI. The TA command in the RAR may indicate the TA command for the corresponding TRP. If a multi-PRACH transmission is performed, the gNB may send one RAR with multiple TA commands or multiple RARs. The RAR may be transmitted form the same TRP as the triggering DCI. If a single RAR is transmitted, the first TA command may be for the first TRP and the second TA command may be for the second TRP. If multiple RAR are transmitted, the first RAR may be for the first TRP and the second RAR may be for the second TRP. Alternatively, a TRP index may be indicated in the RAR. If desired, the second TA command may be a differential value from the first TA command. For example, the following approach may be used to determine the new second TA using the new first TA and the old second TA, as one possibility:

$$TA_{new,2} = TA_{old,2} + (T_{A,2} - 31) * 16 * 64/2^u$$

where $T_{A,2} = T_{A,1} + d_{TA}$, and $T_{A,1}$ and $d_{TA}$ are indicated in the TA command.

If desired, the MAC RAR may be further enhanced in one or more ways. As one possibility, if the RAR is to provide response to PRACH associated with one TRP, it may indicate the TRP index to which to apply the TA command, e.g., to support cross-TRP TA triggering and measurement. If the RAR is to provide response to PRACH associated with multiple TRPs it may provide multiple TA commands; the second TA command may be provided in an absolute or differential manner. The gNB may trigger one message 3 (msg3) or two message 3s. If one msg3 is triggered, the gNB may provide an indication in the RAR for the target TRP index for the UE to identify the transmit beam for the msg3, or the target TRP index may be implicitly determined as the one with the lower CORESETPoolIndex, as various possibilities.

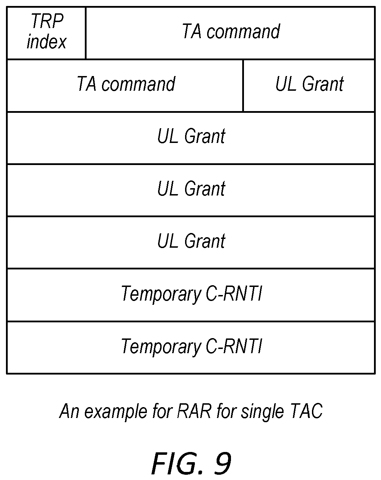

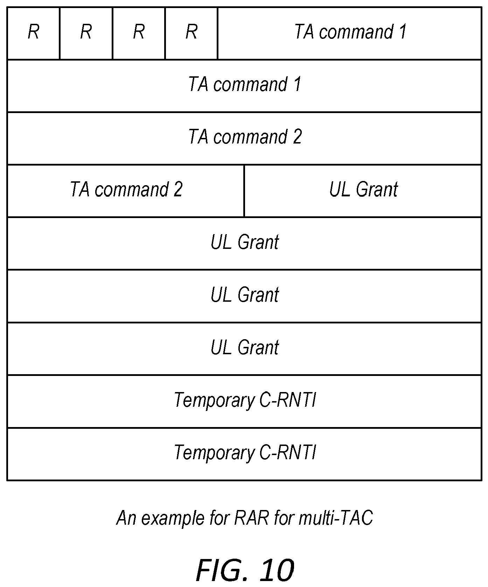

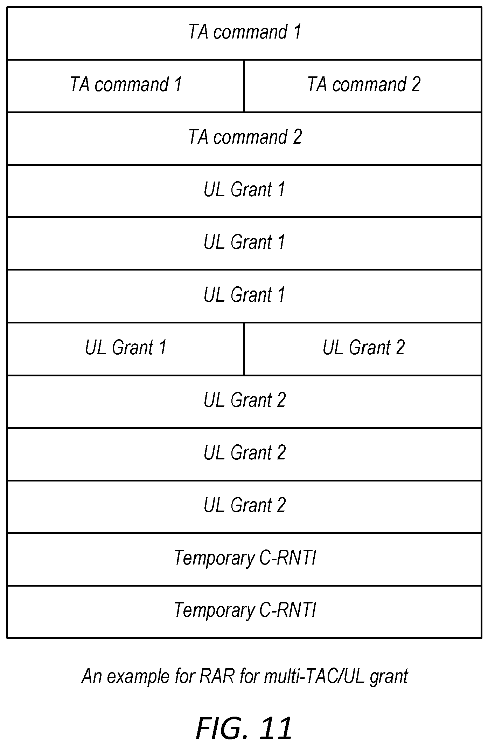

Figures 9-11 illustrate exemplary aspects of possible RAR fields that could be used to provide TA commands in a multi-TRP scenario, according to some embodiments. The example RAR illustrated in Figure 9 may be used to provide a single TA command associated with a single TRP, which may be identified using a TRP index field. The example RAR illustrated in Figure 10 may be used to provide multiple TA commands associated with multiple TRPs. In the scenario of Figure 10, a single uplink grant may be provided in the RAR. The example RAR illustrated in Figure 11 may also be used to provide multiple TA commands associated with multiple TRPs. In the scenario of Figure 11, a multiple uplink grants may be provided in the RAR.

In order to support the possibility for a RAR to provide response to multiple (e.g., "N") PRACH occasions, it may be useful to provide a mechanism to determine the RA-RNTI for the RAR. As one option, the RA-RNTI may be calculated based on one PRACH occasion (e.g., of the potentially multiple PRACH occasions); the RA-RNTI associated with the PRACH occasion in which the random access preamble is transmitted may be computed in the following manner:

$$RA - RNTI = 1 + s_{id} + 14 \times t_{id} + 14 \times 80 \times f_{id} + 14 \times 80 \times 8 \times UL_{carrier\_id}$$

where $s_{id}$ is the index of the first OFDM symbol of the PRACH occasion ($0 \leq s_{id} < 14$), $t_{id}$ is the index of the first slot of the PRACH occasion in a system frame ($0 \leq t_{id} < 80$), where the subcarrier spacing to determine is based on the value of specified in clause 5.3.2 in TS 38.211, $f_{id}$ is the index of the PRACH occasion in the frequency domain ($0 \leq f_{id} < 8$), and $UL_{carrier\_id}$ is the UL carrier used for the random access preamble transmission (0 for NUL carrier, and 1 for SUL carrier). The PRACH occasion selection can be based on an association with the TRP index (CORESETPoolIndex). For example, priority may be given to lower index over higher index. As another example, the time domain location may be used to determine the selected PRACH occasion, e.g., such that the one that is transmitted earlier (or later) is given priority. As a still further example, the frequency domain location may be used to determine the selected PRACH occasion, e.g., such that the one with smaller $f_{id}$ is selected. The mechanism used to determine the selected PRACH occasion could be configured by the gNB, if desired.

As another option, the RA-RNTI may be calculated based on all of the N PRACH occasions. For example, it could be the case that the RA-RNTI for each of the PRACH occasions is calculated, and that the minimal RA-RNTI from those resulting values is selected as the RA-RNTI.

As a still further possibility, any of the RA-RNTI calculated from any of the N PRACH occasions can be used as the RA-RNTI. The gNB may, for example, send RAR repeatedly based on all possible RA-RNTI. Alternatively, the gNB may send one RAR based on one RA-RNTI and the UE may be able to perform blind detection using the various possible RA-RNTIs for RAR decoding.

Note that in some embodiments, it may be possible for the UE to trigger a random access procedure when uplink is out-of-sync without receiving a PDCCH ordering the random access procedure. As one such option, the UE may be able to trigger a PRACH associated with one TRP. In such a scenario, it may be the case that the PRACH triggering is conditional upon the L1-RSRP measured from the associated SSB for the PRACH being larger than a configured threshold (e.g., "*rsrp-ThresholdSSB*") for the TRP. The configured threshold may be common for all TRPs or may be dedicated for each TRP. If more than one TRP is in uplink out-of-sync status, the selected TRP to trigger the PRACH may be predefined (e.g., as the one associated with the lower CORESETPoolIndex, or in any of various other ways) or may be configured by higher layer signaling, according to various embodiments.

As another such option, the UE may be able to trigger multiple PRACH resources associated with multiple TRPs. In such a scenario, it may similarly be the case that the PRACH triggering for each TRP is conditional upon the L1-RSRP measured from the associated SSB for the PRACH being larger than a configured threshold for the TRP. The configured threshold may be common for all TRPs or may be dedicated for each TRP.

One option for managing multiple TAs in multi-TRP operation may include specifying that the TAs for different TRPs belong to different TAGs. Thus, an additional TAG can be configured for a serving cell or serving cell group for the cell(s) with multi-TRP operation. The UE may start or restart the *timeAlignmentTimer* for a TRP when it receives a TA command for the corresponding TRP. If the *timeAlignmentTimer* for one TAG for a TRP ("TRP x") expires, the UE may perform the following procedure for the corresponding TRP. All HARQ buffers for TRP x may be flushed. RRC may be notified to release PUCCH for TRP x, if configured. RRC may be notified to release SRS for TRP x, if configured. Any configured downlink assignments and configured uplink grants for TRP x may be cleared. Any PUSCH resources for semi-persistent CSI reporting for TRP x may be cleared. Note that signals for TRP x can be the signals associated with CORESETPoolIndex x or signals associated with a TCI state for TRP x. If the *timeAlignmentTimers* for both TAGs expire, the UE may apply the behavior indicated in 3GPP TS 38.321 v.16.7.0 section 5.2, at least as one possibility. If desired, it may be the case that the maximum number of TAGs can be increased, for example from 4 to 8.

As another option, it may be possible for the TA for different TRPs to belong to the same TAG. Each TRP may maintain a TA process or sub-group, where the process/sub-group index can be associated with a CORESETPoolIndex. Multiple *timeAlignmentTimers* may be provided in a TAG. An additional *timeAlignmentTimer* for a TAG may only be used for a cell with multi-TRP operation, in some embodiments. The UE may start or restart the *timeAlignmentTimer* when it receives a TA command for the corresponding TRP. If one *timeAlignmentTimer* for a TRP ("TRP x") expires, the UE may perform the following procedure for the corresponding TRP. All HARQ buffers for TRP x may be flushed. RRC may be notified to release PUCCH for TRP x, if configured. RRC may be notified to release SRS for TRP x, if configured. Any configured downlink assignments and configured uplink grants for TRP x may be cleared. Any PUSCH resources for semi-persistent CSI reporting for TRP x may be cleared. If both *timeAlignmentTimers* expire, the UE may apply the behavior indicated in 3GPP TS 38.321 v.16.7.0 section 5.2, at least as one possibility.

Alternatively, it may be the case that both TRPs share a common *timeAlignmentTimer*. The UE may start or restart the *timeAlignmentTimer* when it receives a TA command for one TRP or both TRPs. If the *timeAlignmentTimer* expires, the UE may apply the behavior indicated in 3GPP TS 38.321 v.16.7.0 section 5.2, at least as one possibility.

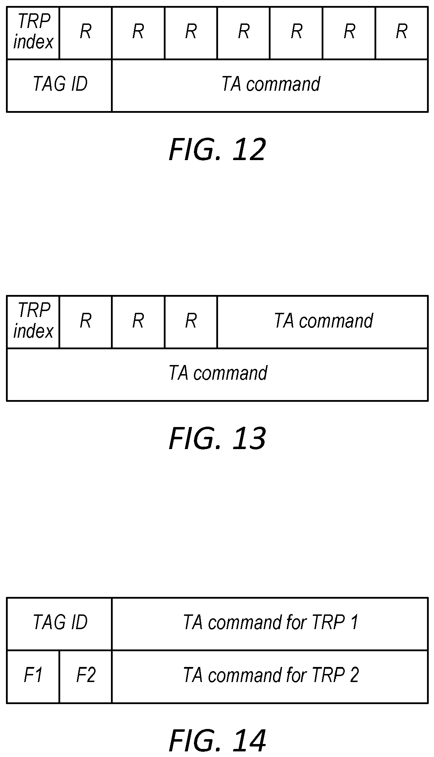

As previously noted herein, a framework for managing multiple TAs for multiple TRPs may benefit from the inclusion of techniques for providing TRP specific TA command indications, at least according to some embodiments. As one such possibility, it may be the case that one MAC CE is configured to provide a TA command for one TRP, where one field to indicate the TRP index (e.g., CORESETPoolIndex) can be introduced in the MAC CE. Figure 12 illustrates exemplary aspects of such a possible MAC CE, in which TAG ID information is provided, according to some embodiments. Figure 13 illustrates exemplary aspects of such a possible MAC CE, in which the TA command is an absolute TA command, according to some embodiments. Fields marked "R" in Figures 12-13 may be reserved fields, according to some embodiments.

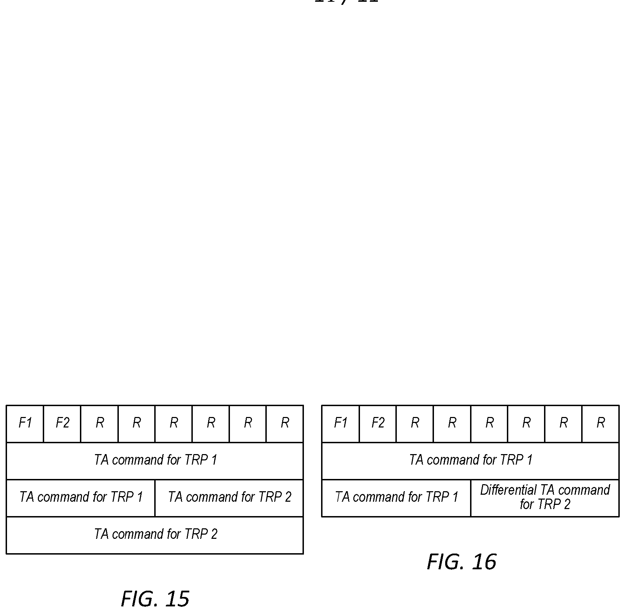

As another possibility, it may be the case that one MAC CE can provide TA commands for one or multiple TRPs. Figure 14 illustrates exemplary aspects of such a possible MAC CE, in which a $F_x$ (e.g., "$F_1$" and "$F_2$") field can be used to indicate whether the TA command for the associated TRP (e.g., TRP1 for F1, TRP2 for F2) is valid and TAG ID information is provided, according to some embodiments. Figure 15 illustrates exemplary aspects of such a possible MAC CE, in which a $F_x$ field can also be used, and in which the TA commands are absolute TA commands, according to some embodiments. Figure 16 illustrates exemplary aspects of such a possible MAC CE, in which a $F_x$ field can also be used, and in which the TA command for one TRP is an absolute TA commands while the TA command for the other TRP is a differential TA command, according to some embodiments. Note that use of the $F_x$ field(s) may be optional and may not be provided, if desired. Fields marked "R" in Figures 14-16 may be reserved fields, according to some embodiments.

In the following further exemplary embodiments are provided.

One set of embodiments may include a method, comprising: by a wireless device: establishing wireless links with a first transmission reception point (TRP) and a second TRP; receiving a first timing advance (TA) command; and determining whether the first TA command is associated with the first TRP or the second TRP.

According to some embodiments, the first TA command is received via a media access control (MAC) control element (CE), wherein the MAC CE indicates whether the first TA command is associated with the first TRP or the second TRP via a first field indicating a first TRP index associated with the first TA command.

According to some embodiments, the MAC CE further includes a second TA command, wherein the MAC CE further indicates whether the second TA command is associated with the first TRP or the second TRP via a second field indicating a second TRP index associated with the second TA command.

According to some embodiments, the method further comprises: determining to initiate a first physical random access channel (PRACH) procedure, wherein the first PRACH procedure is for TA measurement for the first TRP; determining a first PRACH resource to use for the first PRACH procedure based at least in part on the first PRACH procedure being for TA measurement for the first TRP; and transmitting a first PRACH preamble on the first PRACH resource to initiate the first PRACH procedure, wherein the first TA command is received based at least in part in response to the first PRACH preamble.

According to some embodiments, the first TRP is associated with a first cell and the second TRP is associated with a second cell, wherein the method further comprises: receiving configuration information indicating PRACH resources for the first cell and PRACH resources for the second cell, wherein the first PRACH resource is selected from the PRACH resources for the first cell.

According to some embodiments, the first TRP and the second TRP are associated with a first cell, wherein the method further comprises: receiving configuration information splitting PRACH resources for the first cell into PRACH resources for the first TRP and PRACH resources for the second TRP, wherein the first PRACH resource is selected from the PRACH resources for the first TRP.

According to some embodiments, the method further comprises: receiving downlink control information (DCI) via a physical downlink control channel (PDCCH), wherein the DCI is configured to trigger the first PRACH procedure, wherein the DCI is further configured to trigger a second PRACH procedure, wherein the second PRACH procedure is for TA measurement for the second TRP; determining a second PRACH resource to use for the second PRACH procedure based at least in part on the second PRACH procedure being for TA measurement for the second TRP; and transmitting a second PRACH preamble on the second PRACH resource to initiate the second PRACH procedure.

According to some embodiments, the method further comprises: receiving a random access response (RAR) in response to transmitting the first PRACH preamble and the second PRACH preamble, wherein the RAR indicates a first TA command for the first TRP and a second TA command for the second TRP.

According to some embodiments, the RAR triggers the wireless device to transmit one message 3 for both the first PRACH procedure and the second PRACH procedure.

According to some embodiments, the RAR triggers the wireless device to transmit a first message 3 for the first PRACH procedure and a second message 3 for the second PRACH procedure.

According to some embodiments, the method further comprises: determining a random access radio network temporary identifier (RA-RNTI) for the RAR based at least in part on one or more of: TRP indexes associated with the first PRACH preamble transmission and the second PRACH preamble transmission; timing associated with the first PRACH preamble transmission and the second PRACH preamble transmission; frequencies associated with the first PRACH preamble transmission and the second PRACH preamble transmission; or RA-RNTI values associated with the first PRACH preamble transmission and the second PRACH preamble transmission.

According to some embodiments, the method further comprises: receiving a first random access response (RAR) in response to transmitting the first PRACH preamble, wherein the first RAR indicates a first TA command for the first TRP; and receiving a second RAR in response to transmitting the second PRACH preamble, wherein the second RAR indicates a second TA command for the second TRP.

According to some embodiments, the second TA command is a differential TA command configured to be derived based at least in part on the first TA command.

According to some embodiments, the method further comprises: receiving downlink control information (DCI) via a physical downlink control channel (PDCCH), wherein the DCI indicates that the first PRACH procedure is for TA measurement for the first TRP by way of one or more of: a TRP index field included in the DCI; a CORESETPoolIndex associated with the DCI; a CORESETPoolIndex determined based at least in part on the CORESETPoolIndex associated with the DCI; or a starting control channel element (CCE) index for the DCI.

According to some embodiments, the method further comprises: determining to initiate the first PRACH procedure based at least in part on detecting uplink out of sync between the wireless device and the first TRP, wherein determining to initiate the first PRACH procedure is further based at least in part on layer 1 reference signal received power (L1-RSRP) measured for a synchronization signal block associated with the first PRACH resource being greater than a configured threshold.

According to some embodiments, a TA for the first TRP belongs to a first TA group (TAG), wherein a TA for the second TRP belongs to a second TAG.

According to some embodiments, a TA for the first TRP and a TA for the second TRP belong to a first TA group, wherein a first TA sub-group is maintained for the first TRP, wherein a first timing alignment timer is used for the first TA sub-group, wherein a second TA sub-group is maintained the second TRP, wherein a second timing alignment timer is used for the second TA sub-group.

According to some embodiments, a TA for the first TRP and a TA for the second TRP belong to a first TA group, wherein a first TA sub-group is maintained for the first TRP, wherein a second TA sub-group is maintained the second TRP, wherein the first TA sub-group and the second TA sub-group share a timing alignment timer.

Another set of embodiments may include a wireless device, comprising: one or more processors; and a memory having instructions stored thereon, which when executed by the one or more processors, perform steps of the method of any of the preceding examples.

Yet another set of embodiments may include a computer program product, comprising computer instructions which, when executed by one or more processors, perform steps of the method of any of the preceding examples.

Still another set of embodiments may include a method, comprising: by a cellular base station: establishing a wireless link with a wireless device, wherein the wireless device has a wireless link with a first transmission reception point (TRP) and a second TRP; and providing a media access control (MAC) control element (CE) to the wireless device, wherein the MAC CE includes a first TA command associated with a first TRP, wherein the MAC CE indicates that the first TA command is associated with the first TRP.

According to some embodiments, the MAC CE further includes a second TA command, wherein the MAC CE further indicates that the second TA command is associated with the second TRP.

According to some embodiments, the method further comprises: receiving a first physical random access channel (PRACH) preamble from the wireless device, wherein the first PRACH preamble initiates a first PRACH procedure for TA measurement for the first TRP, wherein the first TA command associated with the first TRP is provided in a first random access response (RAR) based at least in part on the first PRACH preamble.

According to some embodiments, the first TRP and the second TRP are associated with a first cell, wherein the method further comprises: providing configuration information to the wireless device splitting PRACH resources for the first cell into PRACH resources for the first TRP and PRACH resources for the second TRP, wherein the first PRACH preamble is received on a PRACH resource associated with the first TRP.

According to some embodiments, the method further comprises: transmitting downlink control information (DCI) to the wireless device via a physical downlink control channel (PDCCH), wherein the DCI is configured to trigger the first PRACH procedure, wherein the DCI is further configured to trigger a second PRACH procedure, wherein the second PRACH procedure is for TA measurement for the second TRP.

According to some embodiments, the method further comprises: wherein the first RAR further provides a second TA command associated with the second TRP.

According to some embodiments, the RAR triggers the wireless device to transmit one message 3 for both the first PRACH procedure and the second PRACH procedure.

According to some embodiments, the RAR triggers the wireless device to transmit a first message 3 for the first PRACH procedure and a second message 3 for the second PRACH procedure.

According to some embodiments, the method further comprises: determining a random access radio network temporary identifier (RA-RNTI) for the RAR based at least in part on one or more of: TRP indexes associated with the first PRACH preamble transmission and a second PRACH preamble transmission associated with the second PRACH procedure; timing associated with the first PRACH preamble transmission and the second PRACH preamble transmission; frequencies associated with the first PRACH preamble transmission and the second PRACH preamble transmission; or RA-RNTI values associated with the first PRACH preamble transmission and the second PRACH preamble transmission.

According to some embodiments, the second TA command is a differential TA command configured to be derived based at least in part on the first TA command.

According to some embodiments, the method further comprises: transmitting downlink control information (DCI) to the wireless device via a physical downlink control channel (PDCCH), wherein the DCI indicates that the first PRACH procedure is for TA measurement for the first TRP by way of one or more of: a TRP index field included in the DCI; a CORESETPoolIndex associated with the DCI; a CORESETPoolIndex determined based at least in part on the CORESETPoolIndex associated with the DCI; or a starting control channel element (CCE) index for the DCI.

According to some embodiments, a TA for the first TRP belongs to a first TA group (TAG), wherein a TA for the second TRP belongs to a second TAG.

According to some embodiments, a TA for the first TRP and a TA for the second TRP belong to a first TA group, wherein a first TA sub-group is maintained for the first TRP, wherein a first timing alignment timer is used for the first TA sub-group, wherein a second TA sub-group is maintained the second TRP, wherein a second timing alignment timer is used for the second TA sub-group.

According to some embodiments, a TA for the first TRP and a TA for the second TRP belong to a first TA group, wherein a first TA sub-group is maintained for the first TRP, wherein a second TA sub-group is maintained the second TRP, wherein the first TA sub-group and the second TA sub-group share a timing alignment timer.

Another set of embodiments may include a cellular base station, comprising: one or more processors; and a memory having instructions stored thereon, which when executed by the one or more processors, perform steps of the method of any of the preceding examples.

A further set of embodiments may include a computer program product, comprising computer instructions which, when executed by one or more processors, perform steps of the method of any of the preceding examples.

A further exemplary embodiment may include a method, comprising: performing, by a wireless device, any or all parts of the preceding examples.

Another exemplary embodiment may include a device, comprising: an antenna; a radio coupled to the antenna; and a processing element operably coupled to the radio, wherein the device is configured to implement any or all parts of the preceding examples.

A further exemplary set of embodiments may include a non-transitory computer accessible memory medium comprising program instructions which, when executed at a device, cause the device to implement any or all parts of any of the preceding examples.

A still further exemplary set of embodiments may include a computer program comprising instructions for performing any or all parts of any of the preceding examples.

Yet another exemplary set of embodiments may include an apparatus comprising means for performing any or all of the elements of any of the preceding examples.

Still another exemplary set of embodiments may include an apparatus comprising a processing element configured to cause a wireless device to perform any or all of the elements of any of the preceding examples.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Any of the methods described herein for operating a user equipment (UE) may be the basis of a corresponding method for operating a base station, by interpreting each message/signal X received by the UE in the downlink as message/signal X transmitted by the base station, and each message/signal Y transmitted in the uplink by the UE as a message/signal Y received by the base station.

Embodiments of the present disclosure may be realized in any of various forms. For example, in some embodiments, the present subject matter may be realized as a computer-implemented method, a computer-readable memory medium, or a computer system. In other embodiments, the present subject matter may be realized using one or more custom-designed hardware devices such as ASICs. In other embodiments, the present subject matter may be realized using one or more programmable hardware elements such as FPGAs.

In some embodiments, a non-transitory computer-readable memory medium (e.g., a non-transitory memory element) may be configured so that it stores program instructions and/or data, where the program instructions, if executed by a computer system, cause the computer system to perform a method, e.g., any of a method embodiments described herein, or, any combination of the method embodiments described herein, or, any subset of any of the method embodiments described herein, or, any combination of such subsets.

In some embodiments, a device (e.g., a UE) may be configured to include a processor (or a set of processors) and a memory medium (or memory element), where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although the embodiments above have been described in considerable detail, numerous variations and modifications will become apparent to those skilled in the art once the above disclosure is fully appreciated.

**Claims**

1. A method for operation in wireless communication, comprising:

   establishing (502) wireless links with a first transmission reception point, TRP, and a second TRP associated with a serving cell;
   receiving (504) a first timing advance, TA, command;

18

determining (506) whether the first TA command is associated with the first TRP or the second TRP, wherein:

a TA for the first TRP belongs to a first TA group, TAG, of the serving cell and a TA for the second TRP belongs to a second TAG of the serving cell,
a first timing alignment timer is used for the first TAG and a second timing

alignment timer is used for the second TAG; and clearing, upon expiry of the first timing alignment timer for the first TAG, any configured downlink assignments and configured uplink grants associated with a transmission control indicator, TCI, state for the first TRP.

2. The method of claim 1,
wherein the first TA command is received in an absolute TA command media access control, MAC, control element, CE comprising 3 reserved fields, the first TA command, and a field to indicate an index associated with the first TRP or the second TRP.

3. The method of claim 1, wherein the method further comprises:

determining to initiate a first physical random access channel, PRACH, procedure, wherein the first PRACH procedure is for TA measurement for the first TRP;
determining a first PRACH resource to use for the first PRACH procedure based at least in part on the first PRACH procedure being for TA measurement for the first TRP; and
transmitting a first PRACH preamble on the first PRACH resource to initiate the first PRACH procedure, wherein the first TA command is received based at least in part in response to the first PRACH preamble.

4. The method of claim 3, wherein the first TRP is associated with a first cell and the second TRP is associated with a second cell, wherein the method further comprises:

receiving configuration information indicating PRACH resources for the first cell and PRACH resources for the second cell,
wherein the first PRACH resource is selected from the PRACH resources for the first cell.

5. The method of claim 3, wherein the first TRP and the second TRP are associated with a first cell, wherein the method further comprises:

receiving configuration information splitting PRACH resources for the first cell into PRACH resources for the first TRP and PRACH resources for the second TRP,
wherein the first PRACH resource is selected from the PRACH resources for the first TRP.

6. The method of claim 3, wherein the method further comprises:

receiving downlink control information, DCI, via a physical downlink control channel, PDCCH, wherein the DCI is configured to trigger the first PRACH procedure, wherein the DCI is further configured to trigger a second PRACH procedure, wherein the second PRACH procedure is for TA measurement for the second TRP;
determining a second PRACH resource to use for the second PRACH procedure based at least in part on the second PRACH procedure being for TA measurement for the second TRP; and
transmitting a second PRACH preamble on the second PRACH resource to initiate the second PRACH procedure.

7. The method of claim 6, wherein the method further comprises:

receiving a random access response, RAR, in response to transmitting the first PRACH preamble and the second PRACH preamble, wherein the RAR indicates a first TA command for the first TRP and a second TA command for the second TRP,
wherein the RAR triggers transmission of either:

one message 3 for both the first PRACH procedure and the second PRACH procedure; or
a first message 3 for the first PRACH procedure and a second message 3 for the second PRACH procedure.

8. The method of claim 7, wherein the method further comprises:
determining a random access radio network temporary identifier, RA-RNTI, for the RAR based at least in part on one or more of:

TRP indexes associated with the first PRACH preamble transmission and the second PRACH preamble transmission;
timing associated with the first PRACH preamble transmission and the second PRACH preamble transmission;
frequencies associated with the first PRACH preamble transmission and the second PRACH preamble transmission; or
RA-RNTI values associated with the first PRACH preamble transmission and the second PRACH preamble transmission.

9. The method of claim 6, wherein the method further comprises:

receiving a first random access response, RAR, in response to transmitting the first PRACH preamble, wherein the first RAR indicates a first TA command for the first TRP; and
receiving a second RAR in response to transmitting the second PRACH preamble, wherein the second RAR indicates a second TA command for the second TRP.

10. The method of any of claims 7-9,
wherein the second TA command is a differential TA command configured to be derived based at least in part on the first TA command.

11. The method of any of claims 3-10, wherein the method further comprises:
receiving downlink control information, DCI, via a physical downlink control channel, PDCCH, wherein the DCI indicates that the first PRACH procedure is for TA measurement for the first TRP by way of one or more of:

a TRP index field included in the DCI;
a CORESETPoolIndex associated with the DCI;
a CORESETPoolIndex determined based at least in part on the CORESETPoolIndex associated with the DCI; or
a starting control channel element (CCE) index for the DCI.

12. The method of claim 3, wherein the method further comprises:

determining to initiate the first PRACH procedure based at least in part on detecting uplink out of sync with the first TRP,
wherein determining to initiate the first PRACH procedure is further based at least in part on layer 1 reference signal received power, L1-RSRP, measured for a synchronization signal block associated with the first PRACH resource being greater than a configured threshold.

13. The method of any of claims 1-12, wherein one of:

a TA for the first TRP belongs to a first TA group, TAG, and a TA for the second TRP belongs to a second TAG; or
a TA for the first TRP and a TA for the second TRP belong to a first TA group, a first TA sub-group is maintained for the first TRP, a first timing alignment timer is used for the first TA sub-group, a second TA sub-group is maintained the second TRP, and a second timing alignment timer is used for the second TA sub-group; or
a TA for the first TRP and a TA for the second TRP belong to a first TA group, a first TA sub-group is maintained for the first TRP, a second TA sub-group is maintained the second TRP, and the first TA sub-group and the second TA sub-group share a timing alignment timer.

14. An apparatus, comprising:

one or more processors; and
a memory having instructions stored thereon, which when executed by the one or more processors, perform steps of the method of any of claims 1-13.

15. A computer program product, comprising computer instructions which, when executed by one or more processors, perform steps of the method of any of claims 1-13.

**Patentansprüche**

1. Verfahren zum Betrieb in drahtloser Kommunikation, umfassend:

   Herstellen (502) von drahtlosen Verknüpfungen mit einem ersten Übertragungsempfangspunkt, TRP, und einem zweiten TRP, die mit einer bedienenden Zelle assoziiert sind;
   Empfangen (504) eines ersten Timing-Advance-, TA-, Befehls;
   Bestimmen (506), ob der erste TA-Befehl mit dem ersten TRP oder dem zweiten TRP assoziiert ist, wobei:

   ein TA für den ersten TRP zu einer ersten TA-Gruppe, TAG, der bedienenden Zelle gehört und ein TA für den zweiten TRP zu einer zweiten TAG der bedienenden Zelle gehört,
   ein erster Timing-Alignment-Timer für die erste TAG verwendet wird und ein zweiter Timing-Alignment-Timer für die zweite TAG verwendet wird; und

   Löschen (clearing), nach Ablauf des ersten Timing-Alignment-Timers für die erste TAG, jeglicher konfigurierter Downlink-Zuweisungen und konfigurierter Uplink-Gewährungen, die mit einem Übertragungssteuerindikator-, TCI-, Zustand für den ersten TRP assoziiert sind.

2. Verfahren nach Anspruch 1, wobei der erste TA-Befehl in einem absoluten TA-Befehlsmedienzugriffssteuerungs-, MAC-, Steuerelement, CE, empfangen wird, das 3 reservierte Felder, den ersten TA-Befehl und ein Feld zum Anzeigen eines mit dem ersten TRP oder dem zweiten TRP assoziierten Index umfasst.

3. Verfahren nach Anspruch 1, wobei das Verfahren ferner umfasst:

   Bestimmen, eine erste physikalische Direktzugriffskanal-, PRACH-, Prozedur zu initiieren, wobei die erste PRACH-Prozedur zur TA-Messung für den ersten TRP dient;
   Bestimmen einer ersten PRACH-Ressource zur Verwendung für die erste PRACH-Prozedur basierend wenigstens teilweise darauf, dass die erste PRACH-Prozedur zur TA-Messung für den ersten TRP dient; und
   Übertragen einer ersten PRACH-Präambel auf der ersten PRACH-Ressource, um die erste PRACH-Prozedur zu initiieren, wobei der erste TA-Befehl wenigstens teilweise basierend auf der ersten PRACH-Präambel empfangen wird.

4. Verfahren nach Anspruch 3, wobei der erste TRP mit einer ersten Zelle assoziiert ist und der zweite TRP mit einer zweiten Zelle assoziiert ist, wobei das Verfahren ferner umfasst:

   Empfangen von Konfigurationsinformation, die PRACH-Ressourcen für die erste Zelle und PRACH-Ressourcen für die zweite Zelle anzeigt,
   wobei die erste PRACH-Ressource aus den PRACH-Ressourcen für die erste Zelle ausgewählt wird,

5. Verfahren nach Anspruch 3, wobei der erste TRP und der zweite TRP mit einer ersten Zelle assoziiert sind, wobei das Verfahren ferner umfasst:
   Empfangen von Konfigurationsinformation, die PRACH-Ressourcen für die erste Zelle in PRACH-Ressourcen für den ersten TRP und PRACH-Ressourcen für den zweiten TRP aufteilt, wobei die erste PRACH-Ressource aus den PRACH-Ressourcen für den ersten TRP ausgewählt wird.

6. Verfahren nach Anspruch 3, wobei das Verfahren ferner umfasst:

   Empfangen von Downlink-Steuerinformation, DCI, über einen physikalischen Downlink-Steuerkanal, PDCCH, wobei die DCI konfiguriert ist, die erste PRACH-Prozedur auszulösen, wobei die DCI ferner konfiguriert ist, eine zweite PRACH-Prozedur auszulösen, wobei die zweite PRACH-Prozedur zur TA-Messung für den zweiten TRP dient;
   Bestimmen einer zweiten PRACH-Ressource zur Verwendung für die zweite PRACH-Prozedur basierend wenigstens teilweise darauf, dass die zweite PRACH-Prozedur zur TA-Messung für den zweiten TRP dient; und
   Übertragen einer zweiten PRACH-Präambel auf der zweiten PRACH-Ressource, um die zweite PRACH-Prozedur zu initiieren.

7. Verfahren nach Anspruch 6, wobei das Verfahren ferner umfasst:

Empfangen einer Direktzugriffsantwort, RAR, als Reaktion auf das Übertragen der ersten PRACH-Präambel und der zweiten PRACH-Präambel, wobei die RAR einen ersten TA-Befehl für den ersten TRP und einen zweiten TA-Befehl für den zweiten TRP anzeigt, wobei die RAR die Übertragung von entweder:

einer Nachricht 3 sowohl für die erste PRACH-Prozedur als auch die zweite PRACH-Prozedur; oder
einer ersten Nachricht 3 für die erste PRACH-Prozedur und einer zweiten Nachricht 3 für die zweite PRACH-Prozedur initiiert.

8.  Verfahren nach Anspruch 7, wobei das Verfahren ferner umfasst:
Bestimmen einer temporären Direktzugriffsfunknetzkennung, RA-RNTI, für die RAR basierend wenigstens teilweise auf einem oder mehreren von:

TRP-Indizes, die mit der ersten PRACH-Präambelübertragung und der zweiten PRACH-Präambelübertragung assoziiert sind;
Timing, das mit der ersten PRACH-Präambelübertragung und der zweiten PRACH-Präambelübertragung assoziiert ist;
Frequenzen, die mit der ersten PRACH-Präambelübertragung und der zweiten PRACH-Präambelübertragung assoziiert sind; oder
RA-RNTI-Werte, die mit der ersten PRACH-Präambelübertragung und der zweiten PRACH-Präambelübertragung assoziiert sind.

9.  Verfahren nach Anspruch 6, wobei das Verfahren ferner umfasst:

Empfangen einer ersten Direktzugriffsantwort, RAR, als Reaktion auf das Übertragen der ersten PRACH-Präambel, wobei die erste RAR einen ersten TA-Befehl für den ersten TRP anzeigt; und
Empfangen einer zweiten RAR als Reaktion auf das Übertragen der zweiten PRACH-Präambel, wobei die zweite RAR einen zweiten TA-Befehl für den zweiten TRP anzeigt.

10. Verfahren nach einem der Ansprüche 7-9, wobei der zweite TA-Befehl ein differentieller TA-Befehl ist, der konfiguriert ist, um wenigstens teilweise basierend auf dem ersten TA-Befehl abgeleitet zu werden.

11. Verfahren nach einem der Ansprüche 3-10, wobei das Verfahren ferner umfasst:

Empfangen von Downlink-Steuerinformation, DCI, über einen physikalischen Downlink-Steuerkanal, PDCCH, wobei die DCI anzeigen,
dass die erste PRACH-Prozedur zur TA-Messung für den ersten TRP dient, mittels eines oder mehrerer von:

einem TRP-Indexfeld, das in der DCI enthalten ist; einem CORESETPoolIndex, der mit der DCI assoziiert ist;
einem CORESETPoolIndex, der wenigstens teilweise basierend auf dem CORESETPoolIndex bestimmt wird, der mit der DCI assoziiert ist; oder
einem Startsteuerkanalelement- (CCE-) Index für die DCI.

12. Verfahren nach Anspruch 3, wobei das Verfahren ferner umfasst:
Bestimmen, die erste PRACH-Prozedur zu initiieren, wenigstens teilweise basierend auf dem Detektieren von Uplink-Out-of-Sync mit dem ersten TRP, wobei das Bestimmen, die erste PRACH-Prozedur zu initiieren, ferner wenigstens teilweise darauf basiert, dass eine Schicht-1-Referenzsignal-Empfangsleistung, L1-RSRP, die für einen Synchronisationssignalblock gemessen wird, der mit der ersten PRACH-Ressource assoziiert ist, größer als ein konfigurierter Schwellenwert ist.

13. Verfahren nach einem der Ansprüche 1-12, wobei eines von:

ein TA für den ersten TRP zu einer ersten TA-Gruppe, TAG, gehört und ein TA für den zweiten TRP zu einer zweiten TAG gehört; oder
ein TA für den ersten TRP und ein TA für den zweiten TRP zu einer ersten TA-Gruppe gehören, eine erste TA-Untergruppe für den ersten TRP aufrechterhalten wird, ein erster Timing-Alignment-Timer für die erste TA-Untergruppe verwendet wird, eine zweite TA-Untergruppe für den zweiten TRP aufrechterhalten wird und ein zweiter Timing-Alignment-Timer für die zweite TA-Untergruppe verwendet wird; oder
ein TA für den ersten TRP und ein TA für den zweiten TRP zu einer ersten TA-Gruppe gehören, eine erste TA-Untergruppe für den ersten TRP aufrechterhalten wird, eine zweite TA-Untergruppe für den zweiten TRP aufrechterhalten wird und die erste TA-Untergruppe und die zweite TA-Untergruppe einen Timing-Alignment-Timer gemeinsam nutzen.

**14.** Vorrichtung, umfassend:

einen oder mehrere Prozessoren; und
einen Speicher mit darauf gespeicherten Anweisungen, die, wenn sie von dem einen oder den mehreren Prozessoren ausgeführt werden, Schritte des Verfahrens nach einem der Ansprüche 1-13 durchführen.

**15.** Computerprogrammprodukt, umfassend Computeranweisungen, die, wenn sie von einem oder mehreren Prozessoren ausgeführt werden, Schritte des Verfahrens nach einem der Ansprüche 1-13 durchführen.

**Revendications**

**1.** Un procédé pour opérer en communication sans fil, comprenant :

l'établissement (502) de liaisons sans fil avec un premier point d'émission-réception, TRP, et un second TRP associé à une cellule de desserte ;
la réception (504) d'une première commande d'avance temporelle, TA ;
la détermination (506) si la première commande TA est associée au premier TRP ou au second TRP, dans lequel :

une TA pour le premier TRP appartient à un premier groupe TA, TAG, de la cellule de desserte et une TA pour le second TRP appartient à un second TAG de la cellule de desserte,
une première temporisation d'alignement de séquencement est utilisée pour le premier TAG et une seconde temporisation d'alignement de séquencement est utilisée pour le second TAG ; et

l'effacement, à l'expiration de la première temporisation d'alignement de séquencement pour le premier TAG, de toutes les attributions de liaison descendante configurées et autorisations de liaison montante configurées associées à un état d'indicateur de contrôle de transmission, TCI, pour le premier TRP.

**2.** Le procédé selon la revendication 1,
dans lequel la première commande TA est reçue dans un élément de contrôle, CE, de contrôle d'accès au support, MAC, de commande TA absolue comprenant 3 champs réservés, la première commande TA, et un champ pour indiquer un indice associé au premier TRP ou au second TRP.

**3.** Le procédé selon la revendication 1, dans lequel le procédé comprend en outre :

la détermination d'initier une première procédure de canal physique d'accès aléatoire, PRACH, dans lequel la première procédure PRACH est pour une mesure de TA pour le premier TRP ;
la détermination d'une première ressource PRACH à utiliser pour la première procédure PRACH sur la base au moins en partie de la première procédure PRACH qui est pour une mesure de TA pour le premier TRP ; et
la transmission d'un premier préambule PRACH sur la première ressource PRACH pour initier la première procédure PRACH,
dans lequel la première commande TA est reçue sur la base au moins en partie en réponse au premier préambule PRACH.

**4.** Le procédé selon la revendication 3, dans lequel le premier TRP est associé à une première cellule et le second TRP est associé à une seconde cellule, dans lequel le procédé comprend en outre :

la réception d'informations de configuration indiquant des ressources PRACH pour la première cellule et des ressources PRACH pour la seconde cellule,
dans lequel la première ressource PRACH est sélectionnée parmi les ressources PRACH pour la première cellule.

**5.** Le procédé selon la revendication 3, dans lequel le premier TRP et le second TRP sont associés à une première cellule, dans lequel le procédé comprend en outre :

la réception d'informations de configuration de fractionnement de ressources PRACH pour la première cellule en ressources PRACH pour le premier TRP et en ressources PRACH pour le second TRP,
dans lequel la première ressource PRACH est sélectionnée parmi les ressources PRACH pour le premier TRP.

6. Le procédé selon la revendication 3, dans lequel le procédé comprend en outre :

la réception d'une information de contrôle de liaison descendante, DCI, via un canal physique de contrôle de liaison descendante, PDCCH, dans lequel la DCI est configurée pour déclencher la première procédure PRACH, dans lequel la DCI est en outre configurée pour déclencher une seconde procédure PRACH, dans lequel la seconde procédure PRACH est pour une mesure de TA pour le second TRP ;
la détermination d'une seconde ressource PRACH à utiliser pour la seconde procédure PRACH sur la base au moins en partie de la seconde procédure PRACH qui est pour une mesure de TA pour le second TRP ; et
la transmission d'un second préambule PRACH sur la seconde ressource PRACH pour initier la seconde procédure PRACH.

7. Le procédé selon la revendication 6, dans lequel le procédé comprend en outre :

la réception d'une réponse d'accès aléatoire, RAR, en réponse à la transmission du premier préambule PRACH et du second préambule PRACH, dans lequel la RAR indique une première commande TA pour le premier TRP et une seconde commande TA pour le second TRP,
dans lequel la RAR déclenche la transmission :

soit d'un seul message 3 à la fois pour la première procédure PRACH et pour la seconde procédure PRACH ; ou
soit d'un premier message 3 pour la première procédure PRACH, et d'un second message 3 pour la seconde procédure PRACH.

8. Le procédé selon la revendication 7, dans lequel le procédé comprend en outre :
la détermination d'un identifiant temporaire de réseau radio à accès aléatoire, RA-RNTI, pour la RAR sur la base au moins en partie d'un ou plusieurs parmi :

des indices TRP associés à la première transmission de préambule PRACH et à la seconde transmission de préambule PRACH ;
un séquencement associé à la première transmission de préambule PRACH et à la seconde transmission de préambule PRACH ;
des fréquences associées à la première transmission de préambule PRACH et à la seconde transmission de préambule PRACH ; ou
des valeurs RA-RNTI associées à la première transmission de préambule PRACH et à la seconde transmission de préambule PRACH.

9. Le procédé selon la revendication 6, dans lequel le procédé comprend en outre :

la réception d'une première réponse d'accès aléatoire, RAR, en réponse à la transmission du premier préambule PRACH,
dans lequel la première RAR indique une première commande TA pour le premier TRP ; et
la réception d'une seconde RAR en réponse à la transmission du second préambule PRACH, dans lequel la seconde RAR indique une seconde commande TA pour le second TRP.

10. Le procédé selon l'une des revendications 7 à 9,
dans lequel la seconde commande TA est une commande TA différentielle configurée pour être dérivée sur la base au moins en partie de la première commande TA.

11. Le procédé selon l'une des revendications 3 à 10, dans lequel le procédé comprend en outre :
la réception d'une information de contrôle de liaison descendante, DCI, via un canal de contrôle de liaison descendante physique, PDCCH, dans lequel la DCI indique que la première procédure PRACH est pour une mesure de TA pour le premier TRP au moyen d'un ou plusieurs parmi :

un champ d'indice TRP inclus dans la DCI ;

un CORESETPoolIndex associé à la DCI ;
un CORESETPoolIndex déterminé sur la base au moins en partie du CORESETPoolIndex associé à la DCI ; ou
un indice d'élément de canal de contrôle (CCE) de départ pour la DCI.

12. Le procédé selon la revendication 3, dans lequel le procédé comprend en outre :

la détermination d'initier la première procédure PRACH sur la base au moins en partie de la détection d'une liaison montante non synchronisée avec le premier TRP,
dans lequel la détermination d'initier la première procédure PRACH est en outre basée au moins en partie sur une puissance reçue de signal de référence de couche 1, L1-RSRP, mesurée pour un bloc de signal de synchronisation associé à la première ressource PRACH qui est supérieure à un seuil configuré.

13. Le procédé selon l'une des revendications 1 à 12, dans lequel il y a un parmi :

une TA pour le premier TRP qui appartient à un premier groupe de TA, TAG, et une TA pour le second TRP appartient à un second TAG ; ou
une TA pour le premier TRP et une TA pour le second TRP qui appartiennent à un premier groupe TA, un premier sous-groupe TA qui est maintenu pour le premier TRP, une première temporisation d'alignement de séquencement qui est utilisée pour le premier sous-groupe TA, un second sous-groupe TA qui est maintenu pour le second TRP, et une seconde temporisation d'alignement de séquencement qui est utilisée pour le second sous-groupe TA ; ou
une TA pour le premier TRP et une TA pour le second TRP qui appartiennent à un premier groupe TA, un premier sous-groupe TA qui est maintenu pour le premier TRP, un second sous-groupe TA qui est maintenu pour le second TRP,
et le premier sous-groupe TA et le second sous-groupe TA qui partagent une temporisation d'alignement de séquencement.

14. Un appareil, comprenant :

un ou plusieurs processeurs ; et
une mémoire ayant des instructions stockées sur celle-ci, qui, lorsqu'elles sont exécutées par les un ou plusieurs processeurs, réalisent des étapes du procédé selon l'une des revendications 1 à 13.

15. Un produit programme de calculateur, comprenant des instructions de calculateur qui, lorsqu'elles sont exécutées par un ou plusieurs processeurs, réalisent des étapes du procédé selon l'une des revendications 1 à 13.

FIG. 1

FIG. 2

FIG. 3

*FIG. 4*

*FIG. 5*

604

606

602

Uplink signal based on TA0
(CORESETPoolIndex = 0)

Uplink signal based on TA1
(CORESETPoolIndex = 1)

*FIG. 6*

PRACH
resource pool

TRP-specific SSB/PRACH
resource grouping

PRACH
resource pool

Group 2(TRP 2)

Group 1(TRP 1)

PDCCH ordered PRACH for
TA measurement for TRP1

FIG. 7

PRACH
resource pool

TRP-specific SSB/PRACH
resource grouping

PRACH
resource pool

◯ Group 2(TRP 2)
● Group 1(TRP 1)

PDCCH ordered PRACH for TA
measurement for TRP1 and TRP2

*FIG. 8*

| TRP index | TA command | |
|---|---|---|
| TA command | | UL Grant |
| UL Grant | | |
| UL Grant | | |
| UL Grant | | |
| Temporary C-RNTI | | |
| Temporary C-RNTI | | |

*An example for RAR for single TAC*

# FIG. 9

| R | R | R | R | TA command 1 |
|---|---|---|---|---|

| TA command 1 |
|---|

| TA command 2 |
|---|

| TA command 2 | UL Grant |
|---|---|

| UL Grant |
|---|

| UL Grant |
|---|

| UL Grant |
|---|

| Temporary C-RNTI |
|---|

| Temporary C-RNTI |
|---|

An example for RAR for multi-TAC

# FIG. 10

| TA command 1 | |
| TA command 1 | TA command 2 |
| TA command 2 | |
| UL Grant 1 | |
| UL Grant 1 | |
| UL Grant 1 | |
| UL Grant 1 | UL Grant 2 |
| UL Grant 2 | |
| UL Grant 2 | |
| UL Grant 2 | |
| Temporary C-RNTI | |
| Temporary C-RNTI | |

An example for RAR for multi-TAC/UL grant

## FIG. 11

| TRP index | R | R | R | R | R | R | R |
|---|---|---|---|---|---|---|---|
| TAG ID | | TA command | | | | | |

## FIG. 12

| TRP index | R | R | R | TA command |
|---|---|---|---|---|
| TA command | | | | |

## FIG. 13

| TAG ID | | TA command for TRP 1 |
|---|---|---|
| F1 | F2 | TA command for TRP 2 |

## FIG. 14

| F1 | F2 | R | R | R | R | R | R |
|----|----|---|---|---|---|---|---|
| TA command for TRP 1 | | | | | | | |
| TA command for TRP 1 | | | | TA command for TRP 2 | | | |
| TA command for TRP 2 | | | | | | | |

FIG. 15

| F1 | F2 | R | R | R | R | R | R |
|----|----|---|---|---|---|---|---|
| TA command for TRP 1 | | | | | | | |
| TA command for TRP 1 | | | | Differential TA command for TRP 2 | | | |

FIG. 16

**EP 4 458 071 B1**

**Patent documents cited in the description**

- US 2018084546 A1

- US 2020053752 A1